# EUROPEAN PATENT SPECIFICATION

(11) **EP 0 738 050 B1**
(45) Date of publication and mention of the grant of the patent: **10.01.2007**
(21) Application number: 96302625.7
(22) Date of filing: 15.04.1996
(51) Int. Cl.: H04B 1/707, H04J 13/00

(54) **Spread spectrum communication apparatus**
Spreizspektrumübertragungsgerät
Appareil de communication à spectre étalé

(30) Priority: 14.04.1995 JP 8898095
(43) Date of publication of application: 16.10.1996
(73) Proprietor: KABUSHIKI KAISHA TOSHIBA, Kawasaki-shi, Kanagawa-ken 210-8572 (JP)
(72) Inventor: Horiguchi, Yoshinori, c/o International Prop. Div., Minato-ku, Tokyo (JP)
(74) Representative: O'Connell, David Christopher

(56) References cited:
- EP-A- 0 639 899
- US-A- 5 278 864
- US-A- 5 309 474

## Description

The present invention generally relates to a decoder, and more particularly, to a radio communication apparatus, more particularly to a spread spectrum communication apparatus having superior characteristics on secrecy.

It is said that the origin of the spread spectrum system is in the 1940s, however the establishment of the basic skill is in the 1960s. It was a relatively new research subject and from several reasons such as the communication system adopting it was too expensive and it was a communicating method superior in secrecy and anti-interference, the uses were limited in communicating field which need a high for the military affairs. However, it gets the attention in the aspect of the frequency deficiency in recent years. Especially a CDMA (code dividing multiplexing system) of QUALCOMM company gets attention in a moving communication field. This system is being proud of by far higher frequency utilizing deficiency than the conventional FDMA (frequency dividing multiplexing system) or TDMA (time dividing multiplexing system) by controlling a power density between a base station and a moving station.

The spread spectrum modulation is accomplished by multiplying a PN (pseudo noise) code to an information signal. If the different PN codes are multiplied to each information which are wanted to be transmitted it will be possible to multiplex them. CDMA is making use of the spread spectrum system but since the object of it is a moving communication, one base station must keep the communicating company with extremely lots of moving stations. Therefore, it will be hard to multiplex in installments by only the PN code. So, where one transmitting PN code is used, the multiplexed signal is separated by using an orthogonal code based on a Walsh-function.

Accordingly, the CDMA has a lot of complex uses, and it will be an expensive system for the application to some audio-visual (AV) apparatus.

When the introduction of the spread spectrum communication system into the ordinary families is taken into consideration, since number of apparatus which is the subject of the communication is few, the system will be more simple and inexpensive when it takes the direct spread spectrum by the PN code which is the original way of spread spectrum system.

However, when a bidirectional communication is taken into consideration even if there are a few number of apparatus, a lot of PN codes will be needed. For instance, when an M-sequence code in the PN code is used, there are only six types of the codes generated by six stages of shift registers. When seven stages of shift registers are provided, 18 types of the codes can be generated. Similarly, when eight stages of shift registers are provided, 36 types of the codes can be generated. Further, when nine stages of shift registers are provided, 48 types of the codes can be generated. That is, when the communication apparatus is controlled by only a PN code having the same code length, an M-sequence generator having at least nine stages of shift registers is needed. Further, it is required to take into consideration the prevention of noises from circumference.

In the spread spectrum signal communication the same PN code generators are required for both the transmission and the reception. Also, when performing the multiple communications the number of circuits for them will increase. So there have been problems of how to use the PN code effectively and how to reduce the scale of the PN code generators.

EP-A-0639899 discloses a CDMA communication system, in which mobile stations delay their transmissions to a base station by random delay amounts.

As described above, the conventional spread spectrum communication apparatus mentioned above had a problem to reduce the scale of PN code generators, since the apparatus has needed the same PN code generators for both of transmission and reception, and in case of multiple communications a number of PN code generators increasing in correspondence to the scale of the multiple communications are needed.

It is, therefore, an object of the present invention to provide a spread spectrum communication apparatus which is able to perform multiple communications without increasing the scale of PN code generators.

According to a first aspect of the present invention, there is provided a spread spectrum communication apparatus as set out in claim 1.

According to a second aspect of the present invention, there is provided a spread spectrum communication apparatus as set out in claim 2.

According to a third aspect of the present invention, there is provided a spread spectrum communication apparatus as set out in claim 3.

According to a fourth aspect of the present invention, there is provided a spread spectrum communication apparatus as set out in claim 4.

According to the arrangements as mentioned above, the PN code has correlation characteristics such that an auto-correlation value is related to a reciprocal of a code length. The use of the correlation characteristics makes it possible to multiplex by controlling their phases even though the PN codes are the same. So, a phase controller for controlling the PN code phase of the transmitted signal so that the phases of the PN codes on an input terminal of one of several transmitter-receivers generated from other transmitter-receivers have differences over predetermined chip durations is possible to prevent the interference even though the PN codes transmitted from several transmitter-receivers are the same. Consequently, since it is possible to extremely reduce the number of the PN codes which are allotted to the communication systems, it will also be possible to reduce the number of stages of the PN code generator and costs of the circuits. Further, in the transmitter-receiver corresponding to the base station which has several receiver blocks, since only one PN code generator is enough for the several receiver blocks it will be also possible to reduce the number of the PN code generators. Accordingly, the multiplexing of the channels by the phase controlling means of the transmitted PN code makes it possible to reduce the costs of the whole system.

Additional objects and advantages of the present invention will be apparent to persons skilled in the art from a study of the following description and the accompanying drawings, which are hereby incorporated and constitute a part of this specification.

For a better understanding of the present invention and many of the attendant advantages thereof, reference will be now made by way of example to the accompanying drawings, wherein:
FIGURE 1 1a a block diagram showing the first embodiment of the present invention;
FIGURE 2 is an explanation diagram for explaining the auto-correlation of the PN code used for the embodiment as shown in FIGURE 1;
FIGURE 3, made up of fig. 2A and 3B, is a block diagram showing the second embodiment of the present invention;
FIGURE 4 is an explanation diagram for explaining the phase of the PN code of M sequence code used for the embodiment as shown in FIGURE 3;
FIGURE 5 is an explanation diagram for explaining the separation of the multiplexed identification signal as shown in FIGURE 3 ;
FIGURE 6 is an explanation diagram for explaining the system construction of the transmitter-receiver as shown in FIGURE 3;
FIGURE 7 is an explanation diagram for explaining the phase of the PN code of the embodiment as shown in FIGURE 3;
FIGURE 8 is a block diagram showing the phase shifter used for the embodiment as shown in FIGURE 3;
FIGURE 9 is an explanation diagram for explaining the PN codes which have absolute phase differences more than one chip duration;
FIGURE 10, made up of FIG. 10A and 10B is a block diagram showing the third embodiment of the present invention;
FIGURE 11 is an explanation diagram for explaining the phase of the PN code in the embodiment as shown in FIGURE 10;
FIGURE 12 is a block diagram explaining the phase shifter used in the embodiment as shown in FIGURE 10;
FIGURE 13 is a block diagram explaining the signals having phase differences in an integer multiple of one chip duration;
FIGURE 14, made up of FIG. 14A and 14B, is a block diagram explaining the fourth embodiment of the present invention; and
FIGURE 15 is a block diagram explaining the phase shifter used in the embodiment as shown in FIGURE 14.

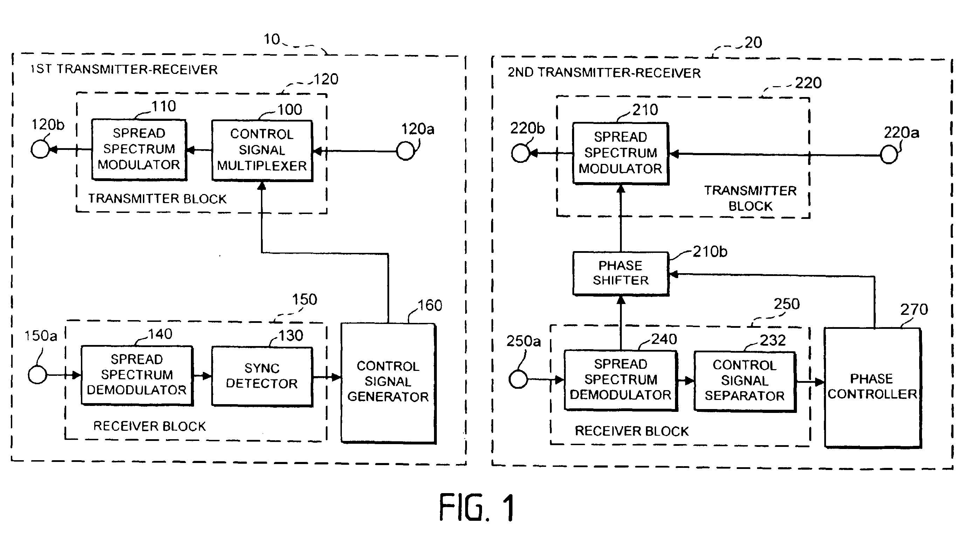

The present invention will be described in detail with reference to the attached drawings; FIGURES 1 through 15.

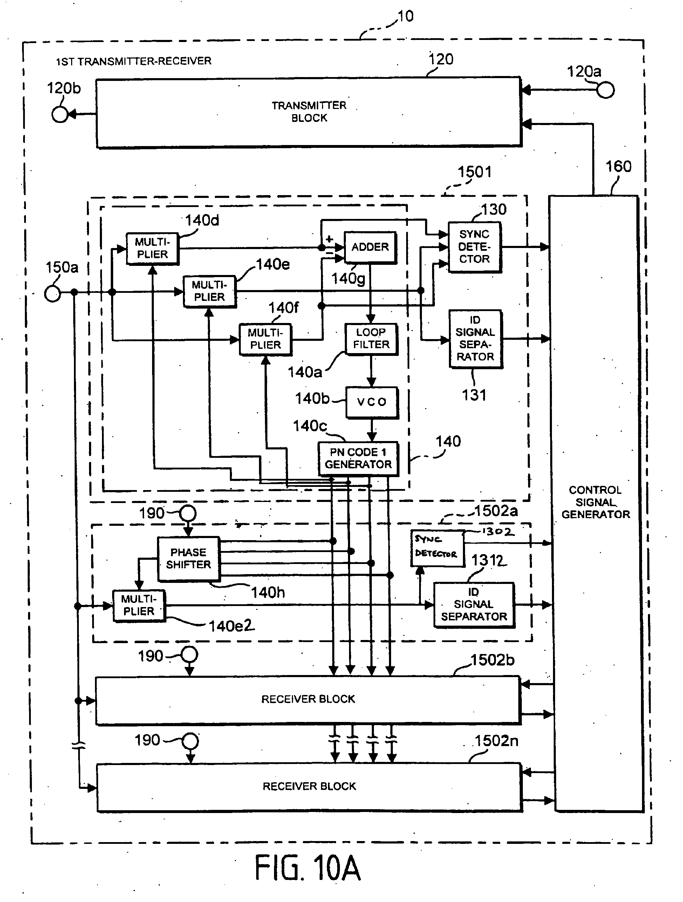

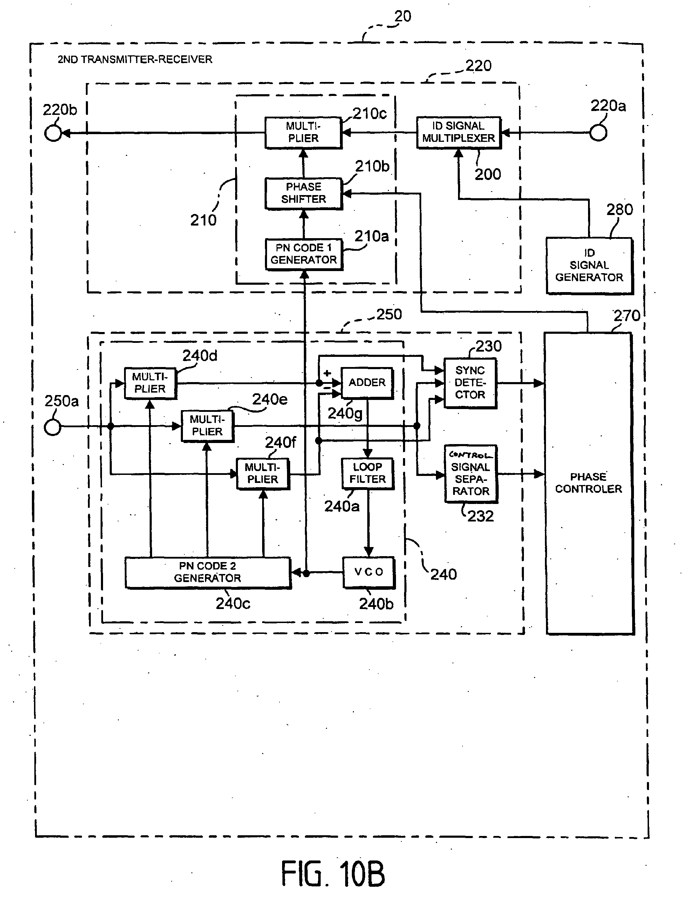

FIGURE 1 is a block diagram for explaining a first embodiment of the present invention. In FIGURE 1, 10 denotes a first transmitter-receiver; 120 denotes a transmitter block; 120a denotes an input terminal; 120b denotes an output terminal; 100 denotes a control signal multiplexer; 110 denotes a spread spectrum modulator; 150 denotes a receiver block; 150a denotes an input terminal of the receiver block; 140 denotes a spread spectrum demodulator; 130 denotes a synchronization detector; 160 denotes a control signal generator; 20 denotes a second transmitter-receiver; 220 denotes a transmitter block,220a denotes an input terminal of the transmitter block; 220b denotes an output terminal of the transmitter block; 210 denotes a spread spectrum modulator; 250 denotes a receiver block; 250a denotes an input terminal of the receiver block; 240 denotes a spread spectrum modulator; 232 denotes a control signal separator; 270 denotes a phase controller; and 210b denotes a phase shifter.

Now, it is assumed that two types of PN codes which have same code length and different generator polynomials are allotted as spread spectrum codes for the first transmitter-receiver 10 and for the second transmitter-receiver 20. In other words, a transmission signal is output from the second transmitter-receiver 20 on which is carried out the spread spectrum modulation with the PN code 1, while a transmission signal is output from the first transmitter-receiver 10 on which is carried out the spread spectrum modulation with the PN code 2.

The first transmitter-receiver 10 inputs an information signal which is to be transmitted to the input terminal 120a of the transmitter block. The information signal is input to the control signal multiplexer 100, and here it is multiplexed with a control signal output from the control signal generator 160. The control signal output from the control signal generator 160 controls whether the phase of the signal should be controlled for the second transmitter-receiver 20 or not according to a reception synchronization is established in the receiver block 150 or not. The information signal multiplexed on the control signal performs a spread spectrum modulation in the spread spectrum modulator 110. As mentioned above, the PN code 2 is used for the spread spectrum modulation.

A transmission signal transmitted from the second transmitter-receiver 20 is received by the input terminal 150a of the receiver block 150. Since the received signal uses the PN code 1 as mentioned above for the spread spectrum modulation it is input to the spread spectrum demodulator so as to be processed the spread spectrum demodulation by establishing the reception synchronization on the PN code 1. The synchronization detector 130 connected to the demodulator 140 detects whether the synchronization is established or not so as to output the signal to the control signal generator 160.

The second transmitter-receiver 20 receives the transmission signal transmitted from the first transmitter-receiver 10 and inputs it to the input terminal 250a of the receiver block 250. Since the received signal uses the PN code 2 for the spread spectrum modulation it is input to the spread spectrum demodulator 240 so as to be processed the spread spectrum demodulation by establishing the reception synchronization on the PN code 2. The control signal separator 232 connected to the output of the demodulator 240 separates the control signal multiplexed in the received signal in the first transmitter-receiver 10 from the received signal so as to output a signal which judges whether the phase of the signal should be controlled by the phase controller 270 or not.

An information signal which is to be transmitted is input to the input terminal 220a of the transmitter block 220. The information signal is spread spectrum modulated in the spread spectrum modulator 210. Though the PN code 1 is used for the spread spectrum modulation, the spread spectrum modulator 210 is connected to the spread spectrum demodulator 240 via the phase shifter 210b. That is, though the PN code 1 is used for the spread spectrum modulation, a clock signal, which is synchronized with the spread spectrum demodulator 240, is used for generating the PN code 1. Therefore, the PN code used in the spread spectrum modulator 210 is taking the phase synchronization with the PN code which is used in the spread spectrum modulator of the first transmitter-receiver 10.

The phase shifter 210b is so controlled by the phase controller 270 to shift the phase of the clock signal which generates the PN code 1. Since when the phase of the clock signal is shifted, the phase of the PN code 1 in the modulator 210 is shifted as well, the transmission signal transmitted from the second transmitter-receiver 20 serves to shift the phase of the PN code 1 for the spread spectrum modulation.

Here, it will be briefly discussed below that even though there are a lot of signals spread spectrum modulated with the same PN code, they are possible to be separated by using the phase shifter 210.

First, in case of the one-to-one communication, each of the first transmitter-receiver 10 and the second transmitter-receiver 20 is a possible communication system, it is easily understood that since the different PN codes are used for the spread spectrum modulation, the transmission signals transmitted from the first and the second transmitter-receivers 10, 20 are able to be communicated without any interference.

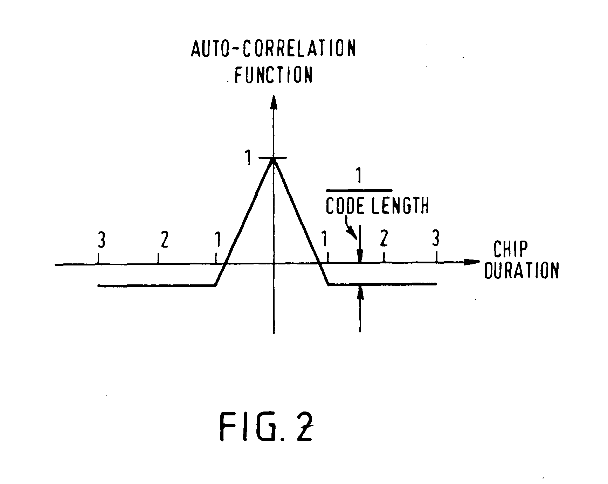

Next, a one-to-many communication wherein one unit of the first transmitter-receiver 10 having several receiver blocks and plural units of the second transmitter-receiver 20 are involved, will be discussed. In this case there are many transmission signals from a plurality of second transmitter-receivers 20 which are spread spectrum modulated with same PN code, while there is one transmission signal from the first transmitter-receiver 10. There occur interferences when the PN code phase differences between the received signals on the input terminal of the first transmitter-receiver 10 become less than one chip duration. This is easily understood from the auto-correlation function of the PN code. As an example of the PN code, the auto-correlation function in the M-sequence code is shown in FIGURE 2. The characteristics are that even though there are two same PN codes, if the relative phase differences between the M-sequence codes are more than one chip duration, the correlation value of them will be a reciprocal of the code length, and the signals will have small correlations.

That is, at the input terminal of the first transmitter-receiver 10 when the relative phase differences between the several PN codes of the transmission signals transmitted from the second transmitter-receiver 20 become less than one chip duration and it is impossible to receive the signals in the receiver block of the first transmitter-receiver 10, the synchronization detector 130 of the first transmitter-receiver 10 transmits the information that it is impossible to establish the synchronization to the control signal generator 160. The control signal generator 160 receives the information and generates the control signal for shifting the phase. The control signal is transmitted to the control signal multiplexer 100 of the transmitter block so as to be transmitted to the second transmitter-receiver 20 together with the information signal. Since only one transmission signal is input to the transmitter block of the second transmitter-receiver 20, the reception synchronization is easily established. The control signal separator 232 separates the control signal from the received signal which is demodulated with the establishment of the reception synchronization, and outputs the control signal for controlling the phase to the phase controller 270. The phase controller 270 receiving the signal controls the phase shifter 210b to shift the phase of the clock signal.

An absolute phase difference arises between the PN code transmitted form the second transmitter-receiver 20 before the control has been made and the other PN code received after the control. Therefore, the relative phase differences arise in the several PN codes which arrive at the input terminal of the first transmitter-receiver 10. If the relative phase differences are more than one chip duration among the PN codes, the first transmitter-receiver 10 will be able to establish the reception synchronization. When it can not establish the reception synchronization it may go through the same process. However, if the phase amounts of the phase shifter 210b controlled by the phase controller 270 are the same in the several second transmitter-receivers 20 it will be hard to establish the synchronization. So, it's better to use different phase values or random phases volumes in each of the second transmitter-receiver 20.

In this embodiment mentioned above the frequency band used for the transmission between the first transmitter-receiver 10 and the second transmitter-receiver 20 is not limited. However, as a matter of it does not matter at all in the embodiment that either the same frequency band or different frequency bands are used.

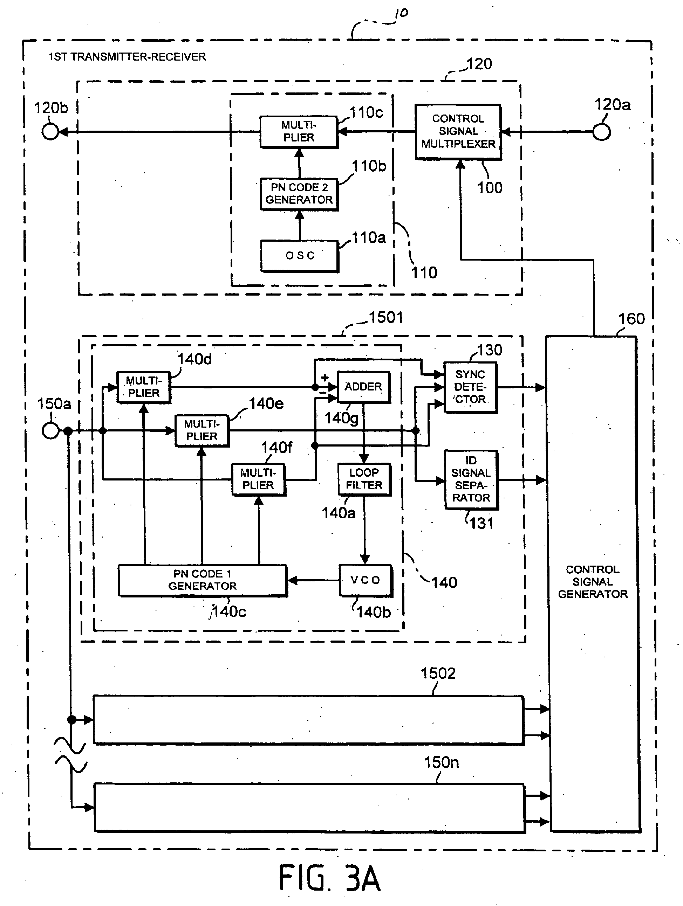

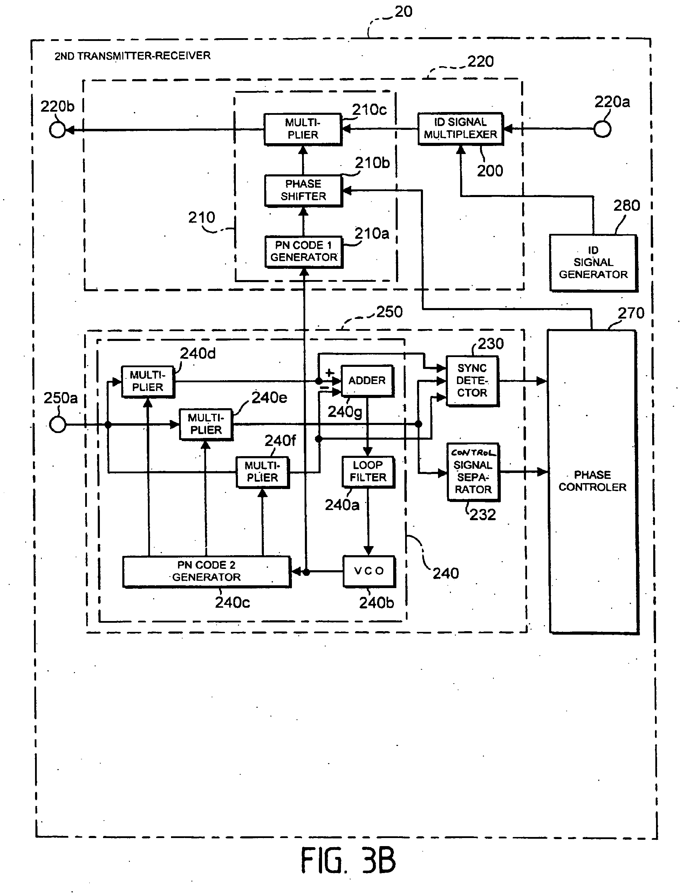

Next, the second embodiment of the present invention will be explained hereinafter referring to FIGURES 3A and 3B. In FIGURE 3A, 10 denotes the first transmitter-receiver, while in FIGURE 3B, 20 denotes the second transmitter-receiver. In the same way as the embodiment in FIGURE 1, two types of PN codes having the same code length and different generator polynomials are allotted as one spread spectrum code for the first transmitter-receiver 10 and the other spread spectrum code for the second transmitter-receiver 20 each other. That is, the transmission signal output from the second transmitter-receiver 20 is spread spectrum modulated with the PN code 1 and one from the transmitter-receiver 10 is spread spectrum modulated with the PN code 2.

First, the elements of the first transmitter-receiver 10 will be explained and the flow and the operation of the signal will be also explained in detail. 100 denotes a control signal multiplexer; 110 denotes a spread spectrum modulator; 110a denotes an oscillator; 110b denotes a PN code 1 generator; 110c denotes a multiplier; 120 denotes a transmitter block; 120a denotes an input terminal of the transmitter block; 120b denotes an output terminal of the transmitter block; 130 denotes a synchronization detector; 131 denotes an identification signal separator; 140 denotes a spread spectrum modulator; 140a denotes a loop filter; 140b denotes a voltage controlled oscillator; 140c denotes a PN code 1 generator; 140d, 140e and 140f denote multipliers; 140g denotes an adder; 1501 through 150n denote receiver blocks; 150a denotes an input terminal of the receiver block; and 160 denotes a control signal generator.

In the transmitter block 120, an information signal is input to the input terminal 120a of the transmitter block 120. The information signal can be either a non-modulated signal or a primary modulated signal. The information signal is multiplexed with the control signal output from the control signal generator 160 in the control signal multiplexer 100.

The PN code 2 generator 110b is operated by the oscillation signal of the oscillator 110a serving as a clock signal. The output signal of the PN code 2 generator 110b is input to the multiplier 110c, wherein the output signal of the control signal multiplexer 100 is carried out the spread spectrum modulation. The spread spectrum modulation signal is then supplied to the output terminal 120b to be transmitted from the transmitter block 120.

In the receiver blocks 1501, 1502 through 150n since each of them has same construction, only the receiver block 1501 will be explained. Further, the spread spectrum demodulator 140 follows the example of a delay locked loop which is commonly used.

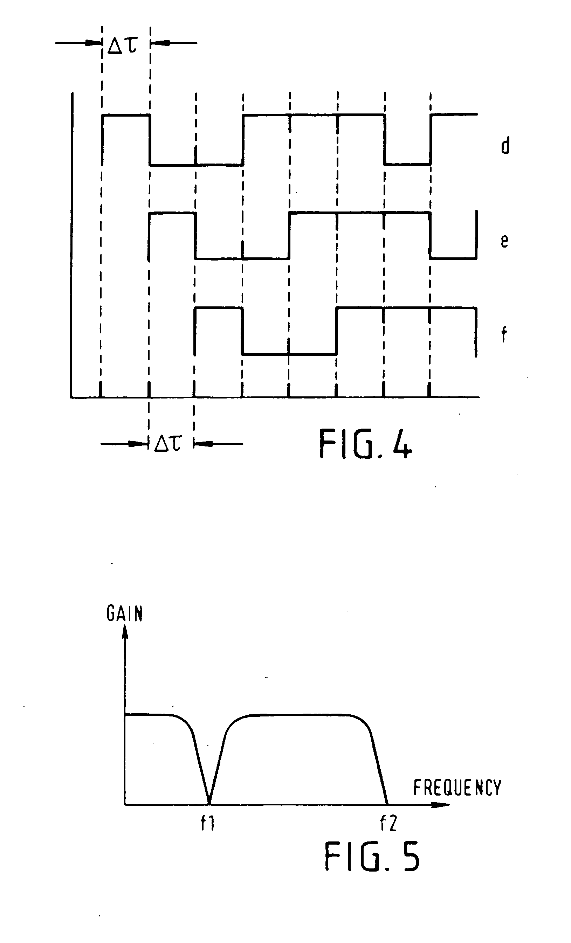

First the receiving signal is input to the input terminal 150 of the receiver block 1501, and then applied to each of the multipliers 140d through 140f. Here, the received signal is multiplied with the PN code 1 output from the PN code 1 generator 140c, but each of the PN codes 1 has a relative phase difference. Generally, the PN codes having phase differences of more than one chip duration are sequentially multiplied in the multipliers from 140d to 140f. The states are shown in FIGURE 4. In FIGURE 4, the tertiary M sequence codes follow the example of the PN codes, and each of the d, e, and f are PN codes having the phase differences more than one chip duration. Δτ means the relative difference of d, e and f, in this case the phase difference is just one chip duration. An advance phase d to e is input to the multiplier 140d and a delay phase f to e is input to the multiplier 140f. The outputs of the multipliers 140d through 140f are input to the synchronization detector 130, the outputs of the multipliers 140d and 140f are input to the adder 140g, the output of the multiplier 140e is input to the identification signal separator 131.

The adder 140g serves as a delay discriminator by subtracting the output of the multiplier 140f from the output of the multiplier 140d. The delay discriminator has a S-curve characteristic in response to the time. The loop filter 140a performs a filtering of the output signal of the adder 140g, and applies the voltage controlled oscillator with a voltage. The oscillation frequency of the voltage controlled oscillator 140b is controlled so that the voltage level approaches the center of the S-curve characteristic. Since the PN code 1 generator 140c is operated by the output signal from the voltage controlled oscillator 140 as the clock signal, the chip rate of the PN code 1 is shifted so as to synchronize to the PN code 1 of the received signal input to the input terminal 150a of the receiver block.

If the synchronization detector 130 is like a level comparator for example, it compares the output amplitudes of three multipliers 140d through 140f, and it will be possible to judge the establishment of the synchronization acquisition when the output amplitude level of the multiplier 140a is larger than that of other two output amplitudes. When the synchronization acquisition is established, a signal spread spectrum demodulated is output from the output terminal of the multiplier 140e and input to the identification signal separator 131. The identification signal separator 131 separates the multiplexed identification signal from the spread spectrum demodulated signal.

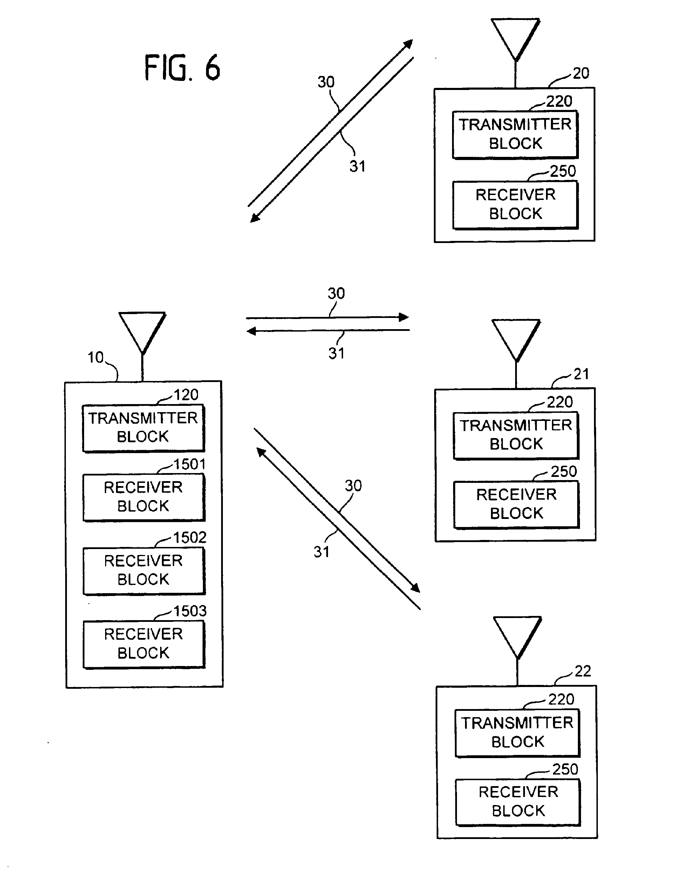

The example of the separated identification signal is shown in FIGURE 5. For instance, it is assumed that the frequency band of the information signal is defined from any frequency f1 to f2, and the frequency band of the identification signal which is multiplexed is defined below f1. Here, f1 < f2. When the frequencies of the information signal and the identification signal which are multiplexed are divided, a low pass filter is used for the identification signal separator. This is decided how the identification signal multiplexer of the transmitter-receiver which is an object of the transmission is constructed. Here, the multiplex by the frequency division is shown, however, any ways can be used for the multiplex methods.

The output signal of the synchronization detector 130 and the output signal of the identification signal separator 131 are input to the control signal generator 160. From these input signals, the output signal of the synchronization detector 130 judges the establishment of the synchronization acquisition and the output signal of the identification signal separator 131 grasps the context of the identification signal multiplexed by the output signal. If a signal which shows the transmitting source is used for the identification signal, it is possible to decide the other transmitter-receiver when the synchronization acquisition is established. Accordingly, the control signal generator 160 judges the way to control the PN code phase transmitted from the other transmitter-receiver, and outputs the control signal to the control signal multiplexer 100 inside the transmitter block 120.

Next, the constructing elements of the second transmitter-receiver 20 will be explained and the rout of the flow of the signal and the operation will be also explained in detail. 200 denotes an identification signal multiplexer; 210 denotes a spread spectrum demodulator; 210a denotes a PN code 1 generator; 210b denotes a phase shifter; 210c denotes a multiplier; 220 denotes a transmitter block; 220a denotes an input terminal of the transmitter block; 220b denotes an output terminal of the transmitter block; 230 denotes a synchronization detector; 232 denotes a control signal separator; 240 denotes a spread spectrum modulator; 240a denotes a loop filter; 240b denotes a voltage controlled oscillator; 240c denotes a PN code 2 generator; 240d, 240e and 240f denote multipliers; 240g denotes an adder; 250 denotes a receiver block; 250a denotes an input terminal of the receiver block; 270 denotes a phase controller; and 280 denotes an identification signal generator.

In the transmitter block 220, an information signal is input to the input terminal 220a of the transmitter block. The information signal can be either a non-modulated signal or a primary modulated signal. The identification signal output from the identification signal generator 280 is multiplexed to the information signal by using the identification signal multiplexer 200. The identification signal can be any signal if the transmitting sources of the signals can be decided in the transmitting and receiving receiver 10.

The PN code 1 generator 210a is operated by the output signal of the voltage controlled oscillator 240b inside the receiver block 250 as the clock signal. The phase of the output signal of the PN code 1 generator 210a is controlled in the phase shifter 210b and input to the multiplier 210c, here the output signal of the identification signal multiplexer 200 is spread spectrum modulated and output to the output terminal 220b of the transmitter block 220 as the transmitting signal.

The construction of the receiver block 220 is almost the same as the receiver block 1501 of the first transmitter-receiver 10. There are two differences. One point is that though the identification signal separator 131 is used for the first transmitter-receiver 10, the control signal separator 232 is used for the second transmitter-receiver 20. However, only the content of the multiplexed signal differs between them, so the explanation of it is not shown here. The other point is that the output signal of the voltage controlled oscillator is used as the clock signal of the PN code 1 generator 210a for the second transmitter-receiver 20. In this point, the operation of the receiver block is the same between them, so the explanation of the receiver block 250 is also not shown here.

The flow of the signals and the operation of the circuits have been described above. In the one-to-many communication, the actual process of the establishment of the synchronization acquisition will be explained hereinafter. But, to simplify it, it is assumed that the system construction of the transmitter-receiver, as shown in FIGURE 3, has one first transmitter-receiver 10 and three second transmitter-receivers 20 as shown in FIGURE 6. In FIGURE 6, 10 denotes a first transmitter-receiver; 120 denotes a transmitter block; 1501 1502 and 1503 denote receiver blocks; 20, 21 and 22 denote second transmitter-receivers; 220 denotes a transmitter block; and 250 denotes a receiver block. Here, 30 and 31 show the directions of the transmission signals. That is, 30 is the signal transmitted from the transmitter block of the first transmitter-receiver 10 to each of the receiver blocks of the second transmitter-receivers 20, 21 and 22, whose spread spectrum are moduLated with the PN code 2. 31 is the signal transmitted form the transmitter blocks of each of the second transmitter-receivers 20, 21 and 22 to the first transmitter-receiver 10, whose spread spectrum are modulated with the PN code 1.

It is assumed that the power supplies of all transmitter-receivers are turned off. In this case, the transmissions of all transmitter-receivers are started and the synchronization acquisitions for receiving are simultaneously started. First, the process of the synchronization acquisition until each of the second transmitter-receivers 20, 21 and 22 perform the reception synchronization of the signals transmitted form the first transmitter-receiver 10 will be explained.

The first transmitter-receiver 10 multiplexes the control signal to the information signal given to the input terminal 120a of the transmitter block 120, carries out the spread spectrum modulation with the PN code 2, and output the spread spectrum modulation signal from the output terminal 120b of the transmitter block 120. Each second transmitter-receiver 20, 21 and 22 receives the transmitting signal from the first transmitter-receiver 10 and leads it to the input terminal 220a of each of the transmitter blocks 220. The spread spectrum demodulator 240 establishes the synchronization acquisition, and the synchronization detector 230 transmits the establishment of the synchronization of the phase controller 270. If the control signal generator 160 of the first transmitter-receiver 10 transmits some control signal to the control signal multiplexer 100 at the time when turning ON the power supply, it will be possible to interpret the control signal by the control signal separators 232 of the second transmitter-receivers 20, 21 and 22. However, in this case it is assumed that any control signal is not transmitted.

Next, the process of the synchronization acquisition until the fist transmitter-receiver 10 performs the reception synchronization of the signal transmitted from each of the transmitter-receivers 20, 21 and 22 will be explained hereinafter.

In each of the second transmitter-receivers 20, 21 and 22, the identification signal is multiplexed to the information signal given to the input terminal 220a of the transmitter block. Here, it is assumed that for example, the identification signal of each of the transmitter-receivers is defined 20 in the second transmitter-receiver 20, while 21 in the transmitter-receiver 21 and 22 in the second transmitter-receiver 22. These identification signals are spread spectrum modulated with the PN code 1 and transmitted from the output terminal 220b of the transmitter block. The PN code 1 generator 210a which generates the PN code 1 is operated by the clock frequency of the voltage controlled oscillator 240b in the receiver block, It means that in the stage when the reception synchronization acquisition of the second transmitter-receiver is established, each of the PN code 1 of the second transmitter-receivers 20, 21 and 22 synchronizes the PN code 2 of the first transmitter-receiver 10. That is, the chip rate of the PN code 2 transmitted from the first transmitter-receiver is equal to that of each of the PN codes 1 transmitted from many second transmitter-receivers.

If each of the PN code phases which arrives to the input terminal 150a of the receiver block of the first transmitter-receiver 10 has differences of more than one chip duration completely, one of the spread spectrum demodulators 140 in the receiver blocks 1501 through 1503 establishes the synchronization acquisition on one of three transmission signals, and the synchronization detector 130 transmits the establishment of the synchronization to the control signal generator 160, then the identification signal separator 131 transmits the name of the transmitter-receiver which is the object of the synchronization acquisition. Since the same operation is performed in two other spread spectrum demodulators 140 in the receiver blocks 1501 through 1503, all synchronization acquisitions are finally established to three transmission signals.

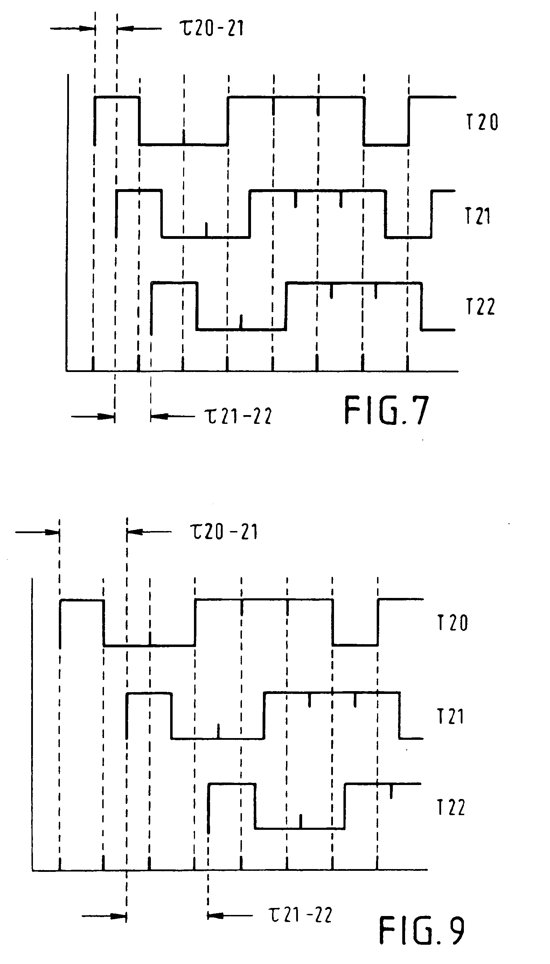

Opposite to this operation, the reception synchronizing process when the PN codes arrive to the input terminal 150a of the receiver block have no phase differences of more than one chip duration will be explained hereinafter. FIGURE 7 is showing the PN code 1 which is taken in the input terminal of the first transmitter-receiver 10. T20 denotes the phase of the PN code 1 transmitted from the second transmitter-receiver 20. T21 denotes the phase of the PN code 1 transmitted from the second transmitter-receiver 21. Further, T22 denotes the phase of the PN code 1 transmitted from the second transmitter-receiver 22. τ 20-21 denotes a phase difference between the phases T20 and T21. τ 21-22 denotes a phase difference between the phases T21 and T22.

First, three transmission signals are input to the input terminal 150a of the receiver block of the first transmitter-receiver 10. However, since receiver blocks 1501 through 1503 can not establish the synchronization acquisition, the synchronization detector 130 can not transmit the establishment of the synchronization acquisition to the control signal generator 160. In this case when the control signal generator 160 can not obtain the synchronous established signal even after certain time has passed since the power supply is turned ON, it transmits an information that the synchronization acquisition can not be establish to the control signal multiplexer 100 as the control signal output. The second transmitter-receivers 20, 21 and 22 which have established the reception synchronization already, receive the information and the phase controller 270 transmits the control signal for shifting the phase to the phase shifter 210b.

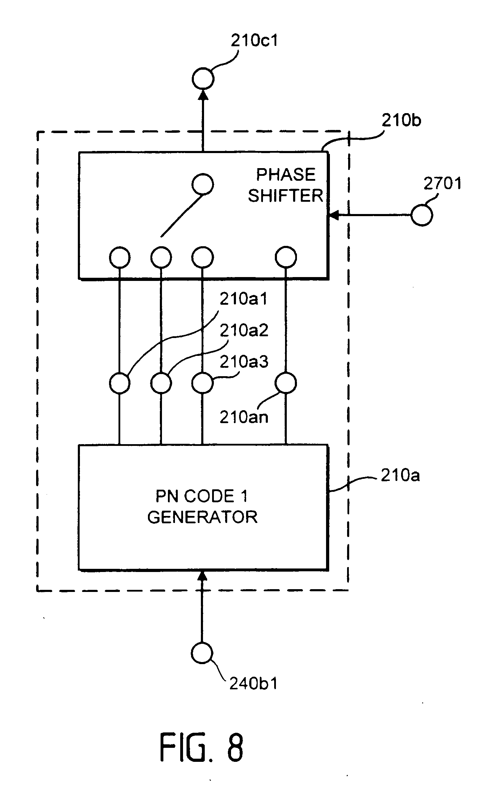

Here, it is assumed that the PN code 1 generator 210a and the phase shifter 210b have constructions as shown in FIGURE 8. 240b1 is a terminal for inputting the output signal of the voltage controlled oscillator 240b, while 210c1 is an output terminal of the phase shifting controller 270. The output signal is input to the multiplier 210c. 2701 is a terminal for inputting the output control signal of the phase controller 270, and 2101 through 210an are output terminals of the PN code 1 generator 210a. As it is generally known, the PN code generators are constructed by shift registers regardless of the types of systems. The PN code having phases which have differences of more than one chip duration are obtained to the output terminals of the shift registers which are side by side. 210a1 through 210an correspond to the output terminals of the shift registers. If the PN code is a type of an M sequence code wherein the suffix "n" means the number of the shift register, in this case, there are three transmission signals which are spread spectrum modulated with the PN code 1, at least three stages of shift registers are constructed. That is, the phase shifter 210b shifts the output terminal of the shift registers, the transmission signal transmitted from the output terminal 220b of the transmitter block is spread spectrum modulated with the PN code 1 which has an absolute phase difference of more than one chip duration.

The example of the PN code which has absolute phase difference of more than one chip duration will be explained in FIGURE 9. The relative phases of T21 and. T22 are shown when the T20 is as a reference phase. In this case, T21 takes a control that the one phase is delayed to the T20 as a result of the phase control, and T22 has been processed with a phase delay control by 2 chip durations.

FIGURE 9 shows the case that a relative phase difference of more than one chip duration has occurred among three PN codes. However, the phase controller 270 in each of the transmitter-receivers controls the phase shifters 210b at the same timing the relative phase differences do not arise on the PN codes transmitted from three transmitter-receivers. So, each of the transmitter-receiver controls the phase shifter 210b at different timing or different value. For instance, when the first transmitter-receiver can not establish the reception synchronization at all, it can transmit to all of second transmitter-receivers to control the phase shifter 210b at random value or it can transmit only the control signal that it can not establish the reception synchronization and the second transmitter-receiver can control the phase shifter 210b at random.

Accordingly, one of the receiver blocks 150a through 1503 establishes the synchronization acquisition to one of three transmission signals. Here, it is assumed that the receiver block 1502 of the first transmitter-receiver 10 establishes the synchronization acquisition to the transmission signal from the second transmitter-receiver 21. Then, the receiver block 1502 transmits the establishment of the synchronization acquisition to the control signal generator 160. The control signal generator 160 transmits the establishment of the synchronization acquisition to the second transmitter-receiver 21 via the control signal multiplexer 100, and holds the state of the phase shifter 210b. Once the synchronization acquisition is established, even if the second transmitter-receiver 21 receives the information that it is impossible to establish the synchronization acquisition after that it needs not to newly control the phase shifter 210b.

In the case, as shown in FIGURE 9, the phase differences of more than one chip duration arise among three phases by one time of the phase control. However, even if the phase differences, more than one chip duration do not arise by one time of the phase control, the repeating of such an operation makes it possible to establish the synchronization acquisition in all receiver blocks of the first transmitter-receiver 10. That is, a plurality of the PN codes 1 which arrive at the input terminal 150a of the receiver block of the first transmitter-receiver 10 have different relative phases more than one chip duration entirely, therefore, it will be possible to communicate without interference of the channels carrying spread spectrum modulation signals with same PN codes.

In this embodiment, the phase shifter 210b has the switch of the shift register output terminal, as shown in FIGURE 8. However, it is evident that if the one shift register output is shifted to a phase shifter which can shift phase more than one chip duration in an analog fashion. Further, in this embodiment, the frequency band which is used for the transmission between the first transmitter-receiver and the second transmitter-receiver is not limited. However, as a matter of fact, there is no problem that a same frequency band or a different frequency band is used for this embodiment.

Next, the third embodiment of the present invention will be explained in reference to the block diagram, as shown in FIGURES 10A and 10B. In FIGURE 10A, 10 denotes a first transmitter-receiver, while in FIGURE 10B, 20 denotes a second transmitter-receiver In this embodiment as same as the embodiment as mentioned above, two different types of the PN codes which have same code lengths and different generator polynomials are allotted as spread spectrum codes for the first transmitter-receiver 10 and the second transmitter-receiver 20. That is, the transmission signal output from the second transmitter-receiver 20 is spread spectrum modulated with the PN code 1 and the transmission signal output from the first transmitter-receiver 10 is spread spectrum modulated with the PN code 2.

Only the receiver block of the first transmitter-receiver 10 is different from the second embodiment. In the embodiment 2, the receiver blocks 1501 through 150n have same constructions. However, in this embodiment, only one receiver block has the same construction as the receiver block of the embodiment 1 and other receiver blocks have extremely simplified constructions. So,the only simplified receiver blocks are explained hereinafter, and after that the process of establishment of the synchronization acquisition will be explained. Here, in FIGURE 10 the same components as those, as shown in FIGURE 3, are assigned with the same reference numerals or symbols. Further, in the communication system, as same as the second embodiment there is one unit of the transmitter-receiver 10 and there are three second transmitter-receivers 20, 21 and 22.

In FIGURE 10, 1502a through 1502n in the first transmitter-receiver 10 denote the receiver blocks having same constructions, 140h denotes a phase shifter; 140e2 denotes a multiplier; 1302 denotes a sync. detector; 1312 denotes an identification signal separator; and 190 denotes a control terminal of the phase shifter 140h.

When the power supplies of all transmitter-receivers are turned ON, signals are started to be transmitted from all transmitter-receivers and at the same time, the synchronization acquisitions for receiving the signals are also started to the operations. The synchronous capturing process till the second transmitter-receivers 20, 21 and 22 perform the reception synchronization or the signals transmitted form the first transmitter-receiver is same as that explained in the first embodiment, so the synchronous capturing process till the first transmitter-receiver 10 performs the reception synchronization of the signals transmitted from the second transmitter-receivers 20, 21 and 22 will be explained hereinafter.

In second transmitter-receivers 20, 21 and 22, each identification signal is multiplexed with the information signal given to the input terminal 220 of their transmitter block. Here, it is assumed that the identification signal of each of the transmitter-receivers is defined 20 in the second transmitter-receiver 20, 21 in the second transmitter-receivers 21 and 22 in the second transmitter-receiver 22. These identification signals are spread spectrum modulated by the PN code 1 and transmitted from the output terminal 220b of the transmitter block 220. The PN code 1 generator 210b 210a which generates the PN code 1 is operated by the clock frequency of the voltage controlled oscillator 240b in the receiver block 250. It means that in the stages when the reception synchronization acquisition of the second transmitter-receivers 20, 21 and 22 is established, each of the PN codes 1 of the second transmitter-receivers 20, 21 and 22 synchronize the PN code 2 of the first transmitter-receiver 10. That is, the chip rate of the PN code 2 transmitted form the first transmitter-receiver 10 is equal to the chip rate of each of the PN codes 1 transmitted from the second transmitter-receivers 20, 21 and 22.

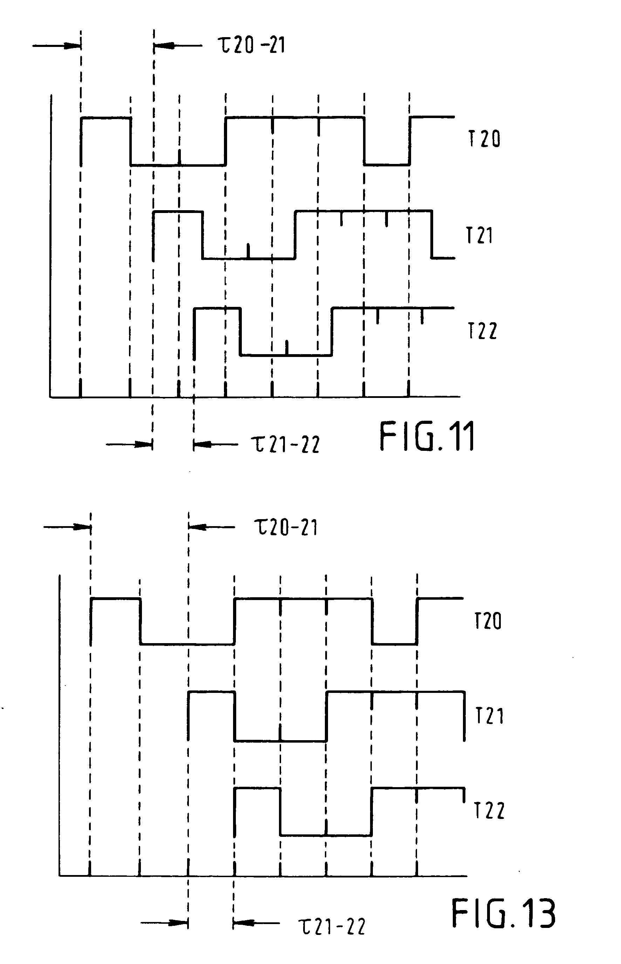

If each of the PN code phases which arrive at the input terminal 150a of the receiver block of the first transmitter-receiver 10 has a phase difference of less than one chip duration, as shown FIGURE 7, it is the worst case that the synchronization acquisition is not performed even in the receiver block 1501. In this case, as explained in the second embodiment, the control signal which fails to establish the synchronization acquisition is transmitted to the receiver blocks of the transmitter-receivers 20, 21 and 22 after a predetermined time. The phases of the PN code3 1 transmitted from the second transmitter-receivers 20, 21 and 22 are controlled as shown in FIGURE 11 by receiving this control signal. In other words, it is the case that T20 has the phase difference of more than one chip duration from T21 and T22, but has such phase difference less than one chip duration from T21 and T22.

In this time, the receiver block 1501 establishes the synchronization acquisition to the T20, the synchronization detector 130 transmits the establishment of the synchronization to the control signal generator 160, and the identification signal separator 131 transmits the identification signal which is an object of the synchronization acquisition to the control signal generator 160.

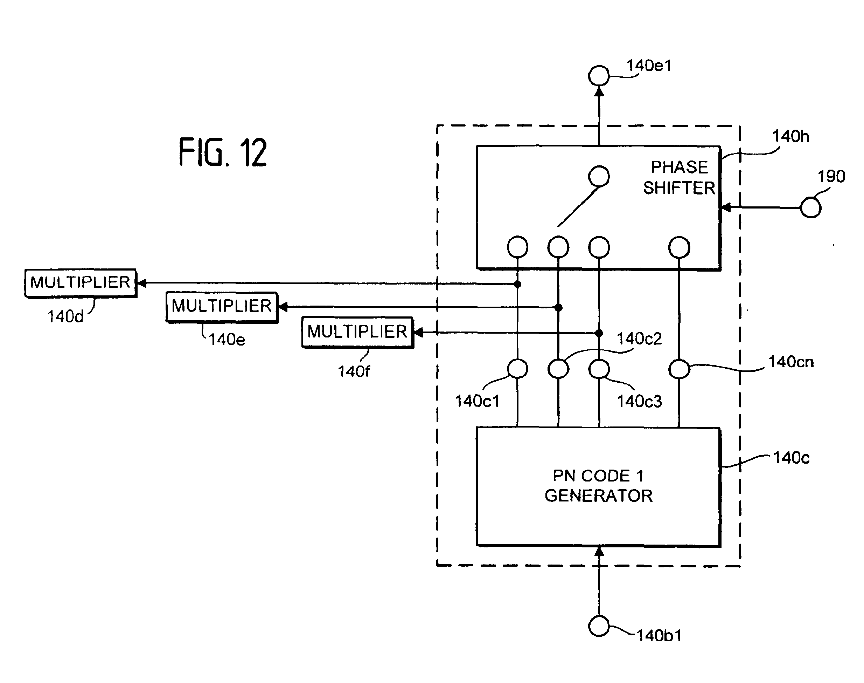

Next, the synchronization acquisition of the receiver blocks 1502a through 1502n will be discussed. It is assumed that the phase shifter 140h includes a switch for changing over the shift register output terminals of the PN code 1 generator 140c as shown in FIGURE 12.

In FIGURE 12, 140d through 140f denote multipliers of the receiver block 1501; 140bl denotes an input terminal for inputting the output signals of the voltage controlled oscillator 140b; 140c denotes a PN code 1 generator; 140e denotes an output terminal of the phase shifter 140h; 190 denotes a control terminal of the phase shifter 140h; and 140cl through 140cn denote output terminals of the PN code I generator 140c. As same as the second embodiment, 140c1 through 140cn correspond to the output terminals of shift registers.

Now, it is assumed that the multipliers 140d through 140f of the receiver block 1501 are connected to the output terminals 140c1 through 140c3 of the shift register of the PN code1 generator 140c, PN code 1 appearing on 140c2 is given to the multiplier 140e of the receiver block 1501 in which the synchronization acquisition has been established. When different PN code 1 which has a phase difference of more than one chip duration is selected from the terminal excepting 140c2, and given to the multiplier 140e, it will be possible to demodulate in other receiver blocks 1502a through 1502n. Since the phase shifter 140h serves to only select the PN code which has the phase difference of more than one chip duration in receiver blocks, there is no problem even if a fixed preset value is given to the control terminal 190.

However, the relative phase difference between the output terminal 140c2 of the shift register and the PN code 1 is an integer multiple of one chip duration. So, as shown in FIGURE 11, it is impossible to demodulate by only the condition that the relative phase differences of the PN codes 1 transmitted from each of the second transmitter-receivers 20, 21 and 22 are more than one chip duration.

Therefore, when the phase shifter 210b in each of the second transmitter-receivers 20, 21 and 22 has a chip shifter which shifts the phase in an analog fashion, and the phase is controlled in the phase controller 270, the relative phase differences of the PN codes transmitted from the second transmitter-receivers 20, 21 and 22 will be entirely an integer multiple of one chip duration at the input terminal of the first transmitter-receiver 10.

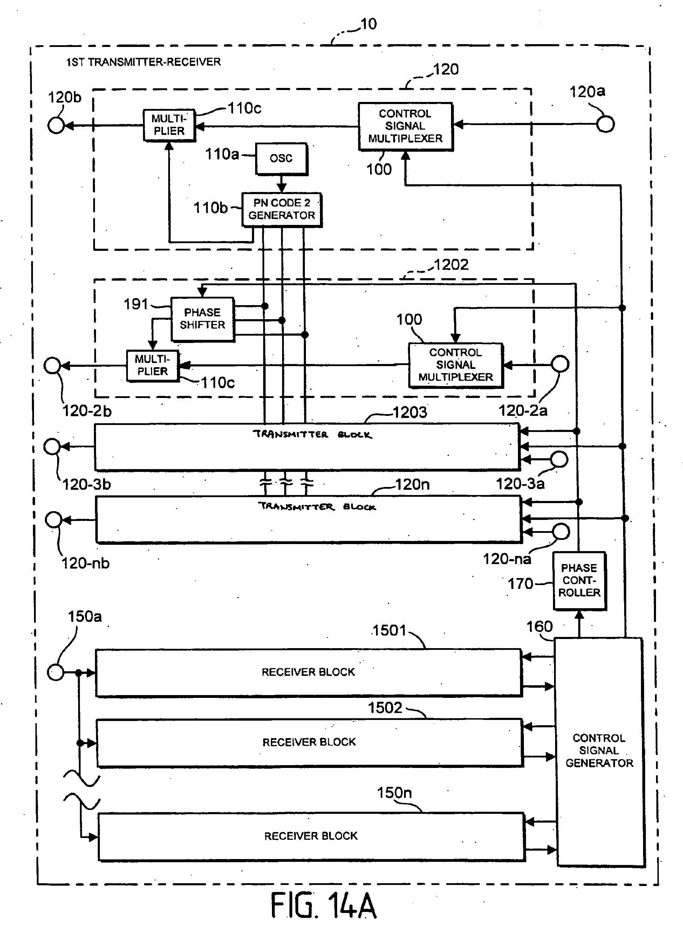

The process will be shown hereinafter. First, it is assumed that the receiver block 1501 establishes the synchronization acquisition in the transmitter-receiver 20. Then, the first transmitter-receiver 10 transmits a control signal to stop the phase shift to the second transmitter-receiver 20 via the control signal generator 160. After that, when the signal which shows the establishment of the synchronization is not input from the synchronization detectors 1302 in the receiver blocks 1502a through 1502n after a certain time has passed, the control signal generator 160 transmits a signal which shows the unestablishment of the synchronization to the control signal multiplexer in the transmitter block 120. The signal is received in each of the second transmitter-receivers 20, 21 and 22. Except the second transmitter-receiver 20, the phase controller 270 controls the phase shift to the phase shifter 210b. The PN code 1 output from the PN code 1 generator 210a is shifted the phase a little, input to the multiplier 210c so as to perform the spread spectrum modulation, and output from the output terminal 220b of the transmitter block 220. The receiver block 1502a receives it again, however, when the phases are not agreed, a control signal for shifting the phases is transmitted to the second transmitter-receivers 20, 21 and 22 after a certain time has passed. The repetition of this process makes it possible that the PN codes 1 transmitted from the second transmitter-receivers 20, 21 and 22 become the signals having the phase differences in an integer multiple of one chip as shown in FIGURE 13 at the input terminal of the first transmitter-receiver 10, so that all synchronization acquisitions of the receiver blocks 1502a through 1502n are established.

That is, the PN codes 1 which arrive at the input terminal 150 of the receiver block of the first transmitter-receiver 10 will have the relative phase difference which is shifted more than an integer multiple of one chip duration entirely, so that it will be possible to communicate without the interference of the circuits.

Here, in this embodiment, the phase shifter 210b is an analog phase shifter such as the phases shifter. However, it is evident that even if the phase shifter is used with a shift register output terminal changing switch of the PN code generator which can shift the chip duration in a digital fashion, the same effect can be obtained. Further,the frequency band used for the transmission between the first transmitter-receiver and the second transmitter-receiver is not limited, but as a matter of fact, there is no problem that the same or different frequency bands are used.

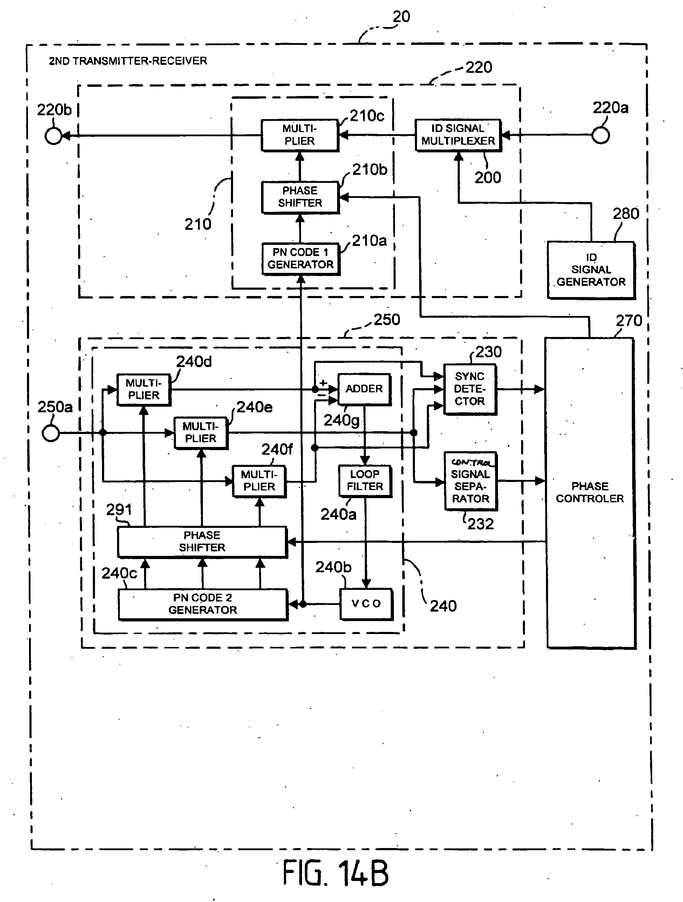

The fourth embodiment will be explained hereinafter in reference to FIGURES 14A and 14B. In FIGURE 14A, 10 denotes a first transinitter-receiver, while in FIGURE 10B, 20 denotes a second transmitter-receiver. In this embodiment as same as other embodiments mentioned above, two different types of PN codes which have the same code length and different generator polynomials are allotted as spread spectrum codes for the first transmitter-receiver 10 and for the second transmitter-receiver 20. The transmission signal output from the second transmitter-receiver 20 is spread spectrum modulated with the PN code 1 and the transmission signal output from the first transmitter-receiver 10 is spread spectrum modulated with the PN code 2.

The transmitter block of the first transmitter-receiver 10 and the receiver block of the second transmitter-receiver are different from other embodiments. In the first transmitter-receiver 10, the transducing part 120 has the same construction in both second and third embodiments, however, in this embodiment only one transmitter block has the same construction as that of the second or third embodiment, and other transmitter blocks have extremely simplified constructions. In above mentioned embodiments the transmission signal from the first transmitter-receiver 10 to the second transmitter-receiver in only one, however, many circuits are possible in this embodiment. Therefore, in the receiver block, which receiver blocks used in second or third embodiment can be used. Further, in the transmitter-receiver, the receiver block has the phase shifter also in this embodiment.

So, in relation to the first transmitter-receiver 10, only the simplified transmitter block will be explained. Similarly, in relation to the second transmitter-receiver, only the phase shifter added in the receiver block will be explained. Here, in FIGURE 14 the same components as those in FIGURE 3 are assigned with the same reference numerals or symbols.

In FIGURE 14, 120, 1202 through 120n denote transmitter blocks 120 in the first transmitter-receiver 10, and has the same construction as that used for the first transmitter-receiver 10 in the second and third embodiments. 1202 through 120n denote simplified transmitter blocks of the first transmitter-receiver and have the same constructions. 191 denotes a phase shifter; 110c denotes a multiplier, 100 denotes a control signal multiplexer; 1202a through 120n denote input terminals of the receiver blocks 1202 through 120n; 1202ab through 120nb denote output terminals of the receiver blocks 1202 through 1210n; and 170 denotes a phase controller. In the second transmitter-receiver, 2501 denotes a receiver block and 291 denotes a phase shifter.

In this embodiment, when power supplies of all transmitter-receivers are turned ON at the same time, signals are started to transmit only from the transmitter block 120 in the first transmitter-receiver. In this case, the synchronization acquisition processes till each of the second transmitter-receivers 20, 21 and 22 perform the reception synchronization of the signals transmitted from the first transmitter-receiver and the first transmitter-receiver 10 performs the reception synchronization of the signals transmitted from each of the second transmitter-receivers 20, 21 and 22 are the same as those explained in embodiment 2 or embodiment 3. So, the process to transmit the signal to the second transmitter-receiver when many signals are needed to be transmitted from the first transmitter-receiver 10 will be explained hereinafter.

First, it is assumed that by some request it will be necessary to keep the second channel to the second transmitter-receiver from the first transmitter-receiver 10. And it is assumed that when the information is transmitted to the second transmitter-receiver 21, the generated request signal is given to the control signal generator 160 from some generator. Since the control signal generator 160 defines the second transmitter-receivers which are receiving objects of each of the receiver blocks 1501 through 150n, the control signal for controlling the phase shifter 191 of the transmitter block 1202 to the phase controller 170 arises and the control signal for changing the channel to the second transmitter-receiver 21 arises at the same time.

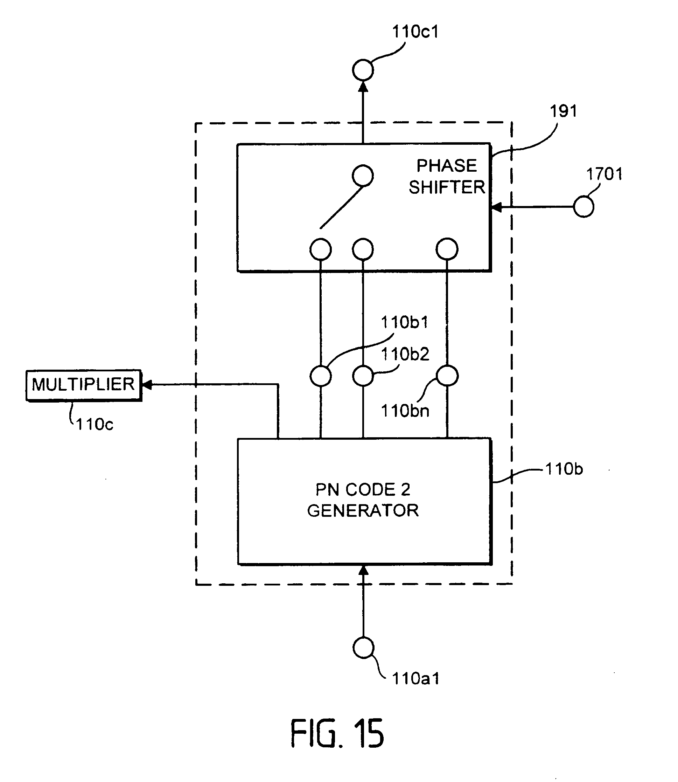

Here, for instance it is assumed that the phase shifter 191 includes a switch for changing the output terminal of the shift register of the PN code 2 generator 110b, as shown in FIGURE 15.

110c denotes a multiplier of the receiver block 120; 110a1 denotes an input terminal for inputting the output signal of the oscillator 110a; 110b denotes a PN code 2 generator; 110c1 denotes an output terminal of the phase shifter 191; 1701 denotes a control terminal of the phase shifter 191; and 110b1 through 110bn denote output terminals of the PN code 2 generator 110b. As same as the embodiments 2 and 3, 110b1 through 110bn correspond to the output terminals of the shift register.

Since the PN code 2 which is shown in 110b1 is given to the multiplier 110c of the transmitter block 120 when the PN codes 2 are selected from the terminals of 110b2 through 110bn and given to the multiplier 110c it will be possible to modulate in other transmitter blocks 1202 through 120n also. However, the PN codes 2 with the relative phase difference of more than one chip duration must be used in each of the transmitter blocks 1202 through 120n. Therefore, the phase controller 170 must control the phase shifter 191 in each of the transmitter blocks 1202 through 120n to have different changing points.

Now, when the phase shifter 191 selects the output terminal 110b1 of the PN code 2 generator 110b, a signal which is spread spectrum modulated with the PN code 2 having relative phase which is different more than one chip duration from the PN code 2 used in the transmitter block 120 is transmitted from the transmitter block 1202.

On the other hand, the control signal generator 160 outputs a control signal for shifting the phase of the receiver block 1501 of the second transmitter-receiver 21 to the control signal multiplexer 100 of the transmitter block 120. In this time, the control signal generator 160 may output an information which shows how to control the phase controller 170 as the control signal. The control signal is received by all of the second transmitter-receivers and then decoded. As a result, only the second transmitter-receiver 21 controls the phase shifter 291 as the control signal shows. Here, when the phase shifter includes a switch for changing the shift register output terminal of the PN code 2 generator as mentioned above, the channel between the transmitter block 1202 of the first transmitter-receiver and the second transmitter-receiver is connected by only changing over the switch as same as the first transmitter-receiver.

Further, in this embodiment, the frequency band used for the transmission between the first transmitter-receiver and the second transmitter-receiver is not limited. However, as a matter of there is no problem that any frequency band, same or different, is used in this embodiment.

As described above, in the spread spectrum communication apparatus according to the present invention it is possible to multiplex many channels by only one PN code, by controlling the phase of the transmitted PN code of the second transmitter-receiver, and in the system such as one PN code is allotted to one channel since a lot or PN codes are not needed for each of the channels, it is possible to prevent the increase of the stages of the PN code generators and to eliminate a substantial amount of circuits.

As described above, the present invention can provide an extremely preferable spread spectrum communication apparatus.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A spread spectrum communication system, comprising a first transmitter-receiver (10) adapted to transmit a first transmission signal, which has been spread spectrum modulated with a second PN code; and a second transmitter-receiver (20) adapted to transmit a second transmission signal, which has been spread spectrum modulated with a first PN code, wherein said first transmission signal is transmitted to said second transmitter-receiver (20) and said second transmission signal is transmitted to said first transmitter-receiver (10), said first transmitter-receiver (10) comprising:
a first receiver block (1501), said first receiver block (1501) comprising a first spread spectrum demodulator (140) adapted to receive said second transmission signal, and adapted to carry out a spread spectrum demodulation of said second transmission signal by synchronizing the phase of said first PN code with the phase of said second transmission signal ; a synchronization detector (130)adapted to determine whether the spread spectrum demodulation signal is synchronized with the phase of the first PN code, and adapted to output a synchronization detection signal;
a control signal generator (160) adapted to generate a control signal for shifting the phase of the first PN code for performing the spread spectrum modulation at the second transmitter-receiver (20) so as to establish a synchronization of said second transmission signal and said first PN code based on the synchronization detection signal;
a first transmitter block (120) adapted to transmit said first transmission signal by multiplexing a first input information signal with the control signal and adapted to carry out a spread spectrum modulation of the multiplexed signal with a second PN code;
said second transmitter-receiver (20) comprising:
a second receiver block (250), said second receiver block (250) comprising a second spread spectrum demodulator (240)adapted to receive said first transmission signal, adapted to perform a reverse spread spectrum process of the spectrum of said first transmission signal by synchronizing the phase of said second PN code with the phase of said first transmission signal, and adapted to demodulate said first transmission signal;
a control signal separator (232) adapted to separate the control signal from said demodulated first transmission signal and adapted to output the separated signal;
a phase controller (270) adapted to generate a phase control signal for shifting the phase of the first PN code for the spread spectrum processing so as to establish the reception synchronization of the second transmitter-receiver (20) based on said separated signal;
a second transmitter block (220) adapted to transmit said second transmission signal by performing the spread spectrum processing of a second input information signal by said first PN code, said first PN code being generated by a clock pulse which is synchronized with the phase of said second spread spectrum demodulator (240) such that the phase of said first PN code is synchronized with the phase of said second PN code; and
a phase shifter (210b) connected between the second receiver block (250) and the second transmitter block (220) adapted to shift the phase of said first PN code based on said phase control signal so as to establish synchronization of the reception with the first transmitter-receiver (10).

2. A spread spectrum communication system, comprising a first transmitter-receiver (10) adapted to transmit a first transmission signal, which has been spread spectrum modulated with a second PN code; and a second transmitter receiver (20) adapted to transmit a second transmission signal, which has been spread spectrum modulated with a first PN code and multiplexed with an identification signal, wherein said first transmission signal is transmitted to said second transmitter-receiver (20) and said second transmission signal is transmitted to said first transmitter-receiver (10), said first transmitter-receiver (10) comprising:
a plurality of first receiver blocks (1501, 1502 ... 150n), each comprising a first demodulator (140), a first synchronisation detector (130), and an identification signal separator (131);
the first demodulator (140) adapted to receive said second transmission signal and adapted to perform a reverse spread spectrum processing of the spectrum of said second transmission signal by synchronizing the phase of said first PN code the phase of said second transmission signal;
the first synchronization detector (130) connected to the first demodulator (140) adapted to detect whether or not the phase of said second transmission signal is synchronized with the phase of said first PN code and adapted to output a first synchronization detection signal;
the identification signal separator (131) adapted to separate said identification signal from said second transmission signal;
a control signal generator (160) adapted to generate a control signal to control the phase of said first PN code for processing the spread spectrum modulation of said second transmitter-receiver (20) so as to establish the reception synchronization for said first PN code with said second transmission signal based on said first synchronisation detection signal;
a first transmitter block (120) comprising a control signal multiplexing means (100) and a first modulator (110);
the control signal multiplexing means (100) adapted to multiplex said control signal with a first input information signal;
the first modulator (110) comprising a second PN code generator (110b) adapted to generate said second PN code from a fixed frequency clock pulse;
the first modulator (110) adapted to generate said first transmission signal by performing a spread spectrum processing of the multiplexed first input information signal and control signal with said second PN code and adapted to transmit said first transmission signal; and
said second transmitter-receiver (20) comprising a second receiver block (250), a phase controller (270), an identification signal generator (280), and a second transmitter block (220);
the second receiver block (250) comprising a second demodulator (240), a second synchronization detector (230) and a control signal separator (232);
the second demodulator (240) adapted to receive said first transmission signal, adapted to perform a reverse spread spectrum processing of the spectrum of said first transmission signal by synchronizing the phase of said second PN code with the phase of said first transmission signal;
the second synchronization detector (230) adapted to detect whether or not the phase of said first transmission signal is synchronized with the phase of said second PN code and adapted to output a second synchronization detection signal;
the control signal separator (232) adapted to separate said control signal from said first transmission signal;
the phase controller (270) adapted to generate a phase control signal to control the phase of the first PN code for spread spectrum modulation so as to establish the reception synchronization of said second transmitter-receiver (20) based on said second synchronization detection signal and the separated first transmission signal;
the identification signal generator (280) adapted to generate the identification signal, said identification signal identifying the transmitting source of said second transmission signal;
the second transmitter block (220) comprising an identification signal multiplexing means (200) and a spread spectrum modulator (210);
the identification signal multiplexing means (200) adapted to multiplex the identification signal with a second input information signal;
the spread spectrum modulator (210) comprising a first PN code generator (210a) adapted to generate said first PN code by generating a clock pulse which is synchronized with the phase of said second demodulator (240) such that the phase of the first PN code is synchronized with the phase of said second PN code; and
the spread spectrum modulator (210) adapted to perform spread spectrum processing of said multiplexed second input information signal and identification signal with said first PN code;
wherein the spread spectrum modulator (210) further comprises a phase shifter (210b) connected to the first PN code generator (210a), the phase shifter (210b) shifting the phase of the first PN code based on the phase control signal to establish the reception synchronization of the first transmitter-receiver (10).

3. A spread spectrum communication apparatus, comprising a first transmitter-receiver (10) adapted to transmit a first transmission signal, which has been spread spectrum modulated with a second PN code; and a second transmitter-receiver (20) adapted to transmit a second transmission signal, which has been spread spectrum modulated with a first PN code and multiplexed with an identification signal, wherein said first transmission signal is transmitted to said second transmitter-receiver (20) and said second transmission signal is transmitted to said first transmitter-receiver (10),
said first transmitter-receiver (10) comprising:
a first receiver block (1501) comprising a first demodulator (140), a first synchronization detector (130), and a first identification signal separator (131);
at least one of a second receiver block (1502a, 1502b, ... 1502n), each of at least one of said second receiver blocks comprising a second demodulator, a second synchronization detector (1302), and a second identification signal separator (1312);
the first demodulator (140) adapted to receive said second transmission signal and adapted to perform a reverse spread spectrum processing of the spectrum of said second transmission signal by synchronizing the phase of said first PN code with the phase of said second transmission signal;
the first synchronization detector (130), connected to the first demodulator (140), adapted to detect whether or not the phase of said second transmission signal is synchronized with the phase of said first PN code and adapted to output a first synchronization detection signal;
each of said second receiver block (1502a, 1502b, ... 1502n) connected to the first demodulator (140) of the first receiver block (1501), each of said second identification signal separator (1312) adapted to separate the identification signal from said second transmission signal, said identification signal identifying the source of said second transmission signal;
each said second demodulator comprising a phase shifter (140h), the phase shifter (140h) connected to the first demodulator (140) for shifting the phase of the first PN code; and
a multiplier (140e2), the multiplier (140e2) adapted to perform the reverse spread spectrum processing of the spectrum of said second transmission signal by multiplying the second transmission signal by said first PN code output from the phase shifter (140h);
the second synchronization detector (1302) connected to the second demodulator and adapted to detect whether or not the phase of said second transmission signal is synchronized with the phase to said first PN code output from the phase shifter (140h);
the second identification signal separator (1312) adapted to separate said identification signal from the demodulated second transmission signal;
a control signal generator (160) adapted to generate a control signal to control the phase of said first PN code for processing the spread spectrum modulation of said second transmission signal so as to establish the reception synchronization for said second transmission signal based on the outputs of said first and second synchronization detectors (130, 1302) and the first and second identification signal separators (131, 1312);
a first transmitter block (120) comprising a control signal multiplexing means (100) and a first modulator (110);
the control signal multiplexing means (100) adapted to multiplex said control signal with a first input information signal;
the first modulator (110) comprising a second PN code generator (110b) adapted to generate a second PN code from a fixed frequency clock pulse;
said second transmitter-receiver (20) comprising a third receiver block (250), a phase controller (270), an identification signal generator (280), and a third transmitter block (220);
the third receiver block (250) comprising a third demodulator (240), a third synchronization detector (230) and a control signal separator (232);
the third demodulator (240) adapted to receive said first transmission signal and adapted to perform a reverse spread spectrum processing of the spectrum of said first transmission signal by synchronizing the phase of said second PN code with the phase of said first transmission signal;
the third synchronization detector (230) adapted to detect whether or not the phase of said first transmission signal is synchronized with the phase of said second PN code and adapted to output a third synchronization detection signal;
the control signal separator (232) adapted to separate said control signal from said demodulated first transmission signal;
the phase controller (270) adapted to generate a phase control signal to control the phase of said first PN code for spread spectrum modulation based on said third synchronization detection signal and said separated first transmission signal;
the identification signal generator (280) adapted to generate the identification signal;
the third transmitter block (220) comprising an identification signal multiplexing means (200) and a spread spectrum modulator (210);
the identification signal multiplexing means (200) adapted to multiplex the identification signal to a second input information signal;
the spread spectrum modulator (210) comprising a first PN code generator (210a) adapted to generate said first PN code by generating a clock pulse synchronized with the phase of the output of said third demodulator (240); and
the third demodulator (240) adapted to perform a spread spectrum processing of said first transmission signal by multiplexing said first transmission signal with the first PN code;
wherein the spread spectrum modulator (210) further comprises a second phase shifter (210b) connected to the first PN code generator (210a), the phase shifter (210b) shifting the phase of said first PN code based on the phase control signal to establish the reception synchronisation of the first transmitter-receiver (10).

4. A spread spectrum communication apparatus comprising a first transmitter-receiver (10) adapted to transmit a first transmission signal, which has been spread spectrum modulated with a second PN code; and a second transmitter-receiver (20) adapted to transmit a second transmission signal, which has been spread spectrum modulated with a first PN code and multiplexed with an identification signal, wherein said first transmission signal is transmitted to said second transmitter-receiver (20) and said second transmission signal is transmitted to said first transmitter-receiver (10),
said first transmitter-receiver (10) comprising:
a plurality of first receiver blocks (1501, 1502 ... 150n), each comprising a first demodulator (140), a first synchronization detector (130), and an identification signal separator (131);
the first demodulator (140) adapted to receive said second transmission signal and adapted to perform a reverse spread spectrum processing of the spectrum of said second transmission signal by synchronizing the phase of said first PN code with the phase of said second transmission signal;
the first synchronization detector (130), connected to the first demodulator (140), adapted to detect whether or not the phase of said second transmission signal is synchronized with the phase of said first PN code;
a control signal generator (160) adapted to generate a control signal to control the phase of said first PN code for processing the spread spectrum modulation of said second transmission signal so as to establish the reception synchronization for said second transmission signal based on the outputs of said first synchronization detector (130) and said identification signal separator (131);
a first transmitter block (120) comprising a control signal multiplexing means (100) and a first modulator (110);
the control signal multiplexing means (100) adapted to multiplex said control signal with a first input information signal;
the first modulator (110) comprising a second PN code generator (110b) adapted to generate a second PN code from a fixed frequency clock pulse;
the first transmitter-receiver (10) further provided with a second transmitter block (1202);
the second transmitter block (1202) comprising a third modulator adapted to operate the spread spectrum processing of a third input information signal and adapted to multiply said modulated third input information signal with the output of a first phase shifter;
said second transmitter-receiver (20) comprising a third receiver block (250), a phase controller (270), an identification signal generator (280), and a third transmitter block (220);
the third receiver block (250) comprising a third demodulator (240), a third synchronization detector (230), and a control signal separator (232);
the third demodulator (240) comprising a first phase shifter (291) for shifting the phase of said first PN code, said first phase shifter being connected to said phase controller (270) and a first PN code generator (210a);
the third demodulator adapted to perform the reverse spread spectrum processing of the spectrum of said first transmission signal and adapted to synchronize the phase of said second PN code with the phase of said first transmission signal,
the second synchronization detector (230) adapted to detect whether or not the phase of said first transmission signal is synchronized with the phase of said second PN code;
the control signal separator (232) adapted to separate said control signal from the first transmission signal;
the phase controller (270) adapted to generate a phase control signal to control the phase of said first PN code for spread spectrum modulation based on said second synchronization detection signal and said separated first transmission signal;
the identification signal generator (280) adapted to generate the identification signal, the identification signal identifying the source of said second transmission signal;
the second transmitter block (220) comprising an identification signal multiplexing means (200) and a spread spectrum modulator (210);
the identification signal multiplexing means (200) multiplexing the identification signal to a second input information signal;
the spread spectrum modulator (210) comprising a first PN code generator (210a) for generating said first PN code by generating a clock pulse which is synchronized with the phase of the output of said second demodulator; and
the second demodulator (240) adapted to perform a spread spectrum processing of said first transmission signal;
wherein the spread spectrum modulator (210) further comprises a second phase shifter (210b) connected to the first PN code generator (210a), the phase shifter (210) shifting the phase of said first PN code based on the phase control signal to establish the reception synchronization of the first transmitter-receiver.

5. A spread spectrum communication apparatus as claimed in claim 4, wherein:
at least a second (1502) of said first receiver blocks comprises:
a first phase shifter (140h) connected to the first demodulator (140) of a first of the first receiver blocks for shifting the phase of the first PN code; and
the first demodulator (140) of the second of the first receiver blocks being adapted to perform the reverse spread spectrum processing of the spectrum by inputting said second transmission signal and multiplying said second transmission signal by the first PN code, the phase of said first PN code being shifted by the first phase shifter (140h).

6. A spread spectrum communication apparatus as claimed in claim 1, 2 or 4, wherein the first phase shifter (140h) for shifting the first PN code phase of the second transmitter-receiver includes means for shifting the first PN code phase by a phase difference of more than one predetermined chip duration.

7. A spread spectrum communication apparatus as claimed in any one of claims 1 to 5, wherein the phase shifter for shifting the phase of said first PN code of said second transmitter-receiver includes means for shifting a phase continuously.

8. A spread spectrum communication apparatus as claimed in any one of claims 1 to 5, wherein the first and the second transmitter-receivers are adapted to the transmission and the reception in same frequency bands.

9. A spread spectrum communication apparatus as claimed in any one of claims 1 to 5, wherein the first and the second transmitter-receivers are adapted to the transmission and the reception in different frequency bands.

## Patentansprüche

1. Bandspreiz-Kommunikationssystem, umfassend einen ersten Sender-Empfänger (10), der dafür eingerichtet ist, ein erstes Übertragungssignal zu senden, das mit einem zweiten PN-Code bandspreizmoduliert ist; und einen zweiten Sender-Empfänger (20), der dafür eingerichtet ist, ein zweites Übertragungssignal zu senden, das mit einem ersten PN-Code bandspreizmoduliert ist, wobei das erste Übertragungssignal an den zweiten Sender-Empfänger (20) gesendet wird und das zweite Übertragungssignal an den ersten Sender-Empfänger (10) gesendet wird, und der erste Sender-Empfänger (10) umfasst:
einen ersten Empfängerblock (1501), wobei der erste Empfängerblock (1501) einen ersten Bandspreizdemodulator (140) enthält, der für den Empfang des zweiten Übertragungssignals ausgelegt ist, und dafür, eine Bandspreizdemodulation des zweiten Übertragungssignals vorzunehmen, und zwar durch das Synchronisieren der Phase des ersten PN-Codes mit der Phase des zweiten Übertragungssignals;
einen Synchronisierungsdetektor (130), der dafür eingerichtet ist, festzustellen, ob das Bandspreiz-Demodulationssignal mit der Phase des ersten PN-Codes synchronisiert ist, und dafür, ein Synchronisierungs-Erkennungssignal auszugeben;
einen Steuersignalgenerator (160), der dafür eingerichtet ist, ein Steuersignal zu erzeugen, das die Phase des ersten PN-Codes verschiebt, damit die Bandspreizmodulation am zweiten Sender-Empfänger (20) erfolgt und **dadurch** eine Synchronisierung des zweiten Übertragungssignals und des ersten PN-Codes anhand des Synchronisierungs-Erkennungssignals vorgenommen wird;
einen ersten Senderblock (120), der dafür ausgelegt ist, das erste Übertragungssignal durch Multiplexen eines ersten eingegebenen Informationssignals mit dem Steuersignal zu senden, und dafür, eine Bandspreizmodulation des gemultiplexten Signals mit einem zweiten PN-Code vorzunehmen,
und der zweite Sender-Empfänger (20) umfasst:
einen zweiten Empfängerblock (250), wobei der zweite Empfängerblock (250) einen zweiten Bandspreizdemodulator (240) enthält, der dafür eingerichtet ist, das erste Übertragungssignal zu empfangen, und dafür, eine umgekehrte Bandspreizverarbeitung des Spektrums des ersten Übertragungssignals vorzunehmen, und zwar durch das Synchronisieren der Phase des zweiten PN-Codes mit der Phase des ersten Übertragungssignals, und dafür, das erste Übertragungssignal zu demodulieren;
einen Steuersignalabtrenner (232), der dafür ausgelegt ist, das Steuersignal vom demodulierten ersten Übertragungssignal abzutrennen, und dafür, das abgetrennte Signal auszugeben;
einen Phasenregler (270), der dafür eingerichtet ist, ein Phasenregelsignal zu erzeugen, damit die Phase des ersten PN-Codes für die Bandspreizverarbeitung verschoben wird und **dadurch** die Empfangssynchronisierung des zweiten Sender-Empfängers (20) anhand des abgetrennten Signals hergestellt wird;
einen zweiten Senderblock (220), der dafür eingerichtet ist, das zweite Übertragungssignal zu senden, in dem er die Bandspreizverarbeitung des zweiten eingegebenen Informationssignals mit dem ersten PN-Code vornimmt, wobei der erste PN-Code von einem Taktimpuls erzeugt wird, der mit der Phase des zweiten Bandspreizdemodulators (240) synchronisiert ist, so dass die Phase des ersten PN-Codes mit der Phase des zweiten PN-Codes synchronisiert ist; und
einen Phasenschieber (210b), der zwischen den zweiten Empfängerblock (250) und den zweiten Senderblock (220) geschaltet und dafür eingerichtet ist, die Phase des ersten PN-Codes abhängig von dem Phasenregelsignal zu verschieben, damit die Synchronisierung des Empfangs mit dem ersten Sender-Empfänger (10) hergestellt wird.

2. Bandspreiz-Kommunikationssystem, umfassend einen ersten Sender-Empfänger (10), der dafür eingerichtet ist, ein erstes Übertragungssignal zu senden, das mit einem zweiten PN-Code bandspreizmoduliert ist; und einen zweiten Sender-Empfänger (20), der dafür eingerichtet ist, ein zweites Übertragungssignal zu senden, das mit einem ersten PN-Code bandspreizmoduliert und mit einem Kennzeichnungssignal gemultiplext ist,
wobei das erste Übertragungssignal an den zweiten Sender-Empfänger (20) gesendet wird und das zweite Übertragungssignal an den ersten Sender-Empfänger (10) gesendet wird, und der erste Sender-Empfänger (10) umfasst:
eine Anzahl erste Empfängerblöcke (1501, 1502, ..., 150n), die jeweils einen ersten Demodulator (140), einen ersten Synchronisierungsdetektor (130) und einen Kennzeichnungssignal-Abtrenner (131) enthalten,
dass der erste Demodulator (140) dafür ausgelegt ist, das zweite Übertragungssignal zu empfangen, und dafür, eine umgekehrte Bandspreizverarbeitung des Spektrums des zweiten Übertragungssignals vorzunehmen, und zwar durch das Synchronisieren der Phase des ersten PN-Codes mit der Phase des zweiten Übertragungssignals;
dass der erste Synchronisierungsdetektor (130) mit dem ersten Demodulator (140) verbunden und dafür eingerichtet ist, festzustellen, ob die Phase des zweiten Übertragungssignals mit der Phase des ersten PN-Codes synchronisiert ist, und dafür, ein erstes Synchronisierungs-Erkennungssignal auszugeben;
dass der Kennzeichnungssignal-Abtrenner (131) dafür eingerichtet ist, das Kennzeichnungssignal vom zweiten Übertragungssignal abzutrennen;
einen Steuersignalgenerator (160), der dafür eingerichtet ist, ein Steuersignal zu erzeugen, das die Phase des ersten PN-Codes steuert, damit die Bandspreizmodulation des zweiten Sender-Empfängers (20) verarbeitet wird und die Empfangssynchronisierung für den ersten PN-Code mit dem zweiten Übertragungssignal anhand des ersten Synchronisierungs-Erkennungssignals hergestellt wird;
einen ersten Senderblock (120), der eine Steuersignal-Multiplexvorrichtung (100) umfasst sowie einen ersten Modulator (110);
dass die Steuersignal-Multiplexvorrichtung (100) dafür ausgelegt ist, das Steuersignal mit einem ersten eingegebenen Informationssignal zu multiplexen;
dass der erste Modulator (110) einen zweiten PN-Code-Generator (110b) umfasst, der dafür eingerichtet ist, den zweiten PN-Code aus einem Taktimpuls mit fester Frequenz zu erzeugen;
dass der erste Modulator (110) dafür ausgelegt ist, das erste Übertragungssignal **dadurch** zu erzeugen, dass eine Bandspreizverarbeitung des gemultiplexten ersten eingegebenen Informationssignals und Steuersignals mit dem zweiten PN-Code erfolgt, und dafür, das erste Übertragungssignal zu senden; und
dass der zweite Sender-Empfänger (20) einen zweiten Empfängerblock (250), einen Phasenregler (270), einen Kennzeichnungssignal-Generator (280) und einen zweiten Senderblock (220) umfasst;
dass der zweite Empfängerblock (250) einen zweiten Demodulator (240), einen zweiten Synchronisierungsdetektor (230) und einen Steuersignalabtrenner (232) enthält;
dass der zweite Demodulator (240) dafür eingerichtet ist, das erste Übertragungssignal zu empfangen, und dafür, eine umgekehrte Bandspreizverarbeitung des Spektrums des ersten Übertragungssignals vorzunehmen, und zwar durch das Synchronisieren der Phase des zweiten PN-Codes mit der Phase des ersten Übertragungssignals;
dass der zweite Synchronisierungsdetektor (230) dafür eingerichtet ist, festzustellen, ob die Phase des ersten Übertragungssignals mit der Phase des zweiten PN-Codes synchronisiert ist, und dafür, ein zweites Synchronisierungs-Erkennungssignal auszugeben;
dass der Steuersignalabtrenner (232) dafür ausgelegt ist, das Steuersignal vom ersten Übertragungssignal abzutrennen;
dass der Phasenregler (270) dafür eingerichtet ist, ein Phasenregelsignal zu erzeugen, damit die Phase des ersten PN-Codes für die Bandspreizmodulation geregelt wird und die Empfangssynchronisierung des zweiten Sender-Empfängers (20) anhand des zweiten Synchronisierungs-Erkennungssignals und des abgetrennten ersten Übertragungssignals hergestellt wird;
dass der Kennzeichnungssignal-Generator (280) dafür eingerichtet ist, das Kennzeichnungssignal zu erzeugen, wobei das Kennzeichnungssignal die Sendequelle des zweiten Übertragungssignals kennzeichnet;
dass der zweite Senderblock (220) eine Kennzeichnungssignal-Multiplexvorrichtung (200) und einen Bandspreizmodulator (210) enthält;
dass die Kennzeichnungssignal-Multiplexvorrichtung (200) dafür eingerichtet ist, das Kennzeichnungssignal mit einem zweiten eingegebenen Informationssignal zu multiplexen;
dass der Bandspreizmodulator (210) einen ersten PN-Code-Generator (210a) umfasst, der dafür ausgelegt ist, den ersten PN-Code zu erzeugen, indem er einen Taktimpuls erzeugt, der mit der Phase des zweiten Demodulators (240) synchronisiert ist, so dass die Phase des ersten PN-Codes mit der Phase des zweiten PN-Codes synchronisiert ist; und
dass der Bandspreizmodulator (210) dafür ausgelegt ist, die Bandspreizverarbeitung des gemultiplexten zweiten eingegebenen Informationssignals und des Kennzeichnungssignals mit dem ersten PN-Code vorzunehmen,
wobei der Bandspreizmodulator (210) zudem einen Phasenschieber (210b) umfasst, der mit dem ersten PN-Code-Generator (210a) verbunden ist, und der Phasenschieber (210b) die Phase des ersten PN-Codes abhängig von dem Phasenregelsignal verschiebt, um die Empfangssynchronisierung des ersten Sender-Empfängers (10) herzustellen.

3. Bandspreiz-Kommunikationsvorrichtung, umfassend einen ersten Sender-Empfänger (10), der dafür eingerichtet ist, ein erstes Übertragungssignal zu senden, das mit einem zweiten PN-Code bandspreizmoduliert ist; und einen zweiten Sender-Empfänger (20), der dafür eingerichtet ist, ein zweites Übertragungssignal zu senden, das mit einem ersten PN-Code bandspreizmoduliert und mit einem Kennzeichnungssignal gemultiplext ist, wobei das erste Übertragungssignal an den zweiten Sender-Empfänger (20) gesendet wird und das zweite Übertragungssignal an den ersten Sender-Empfänger (10) gesendet wird,
und der erste Sender-Empfänger (10) umfasst:
einen ersten Empfängerblock (1501), der einen ersten Demodulator (140), einen ersten Synchronisierungsdetektor (130) und einen ersten Kennzeichnungssignal-Abtrenner (131) enthält;
mindestens einen zweiten Empfängerblock (1502a, 1502b, ..., 1502n), wobei jeder der mindestens einmal vorhandenen zweiten Empfängerblöcke einen zweiten Demodulator, einen zweiten Synchronisierungsdetektor (1302) und einen zweiten Kennzeichnungssignal-Abtrenner (1312) umfasst;
dass der erste Demodulator (140) dafür ausgelegt ist, das zweite Übertragungssignal zu empfangen, und dafür, eine umgekehrte Bandspreizverarbeitung des Spektrums des zweiten Übertragungssignals vorzunehmen, und zwar durch das Synchronisieren der Phase des ersten PN-Codes mit der Phase des zweiten Übertragungssignals;
dass der erste Synchronisierungsdetektor (130) mit dem ersten Demodulator (140) verbunden und dafür eingerichtet ist, festzustellen, ob die Phase des zweiten Übertragungssignals mit der Phase des ersten PN-Codes synchronisiert ist, und dafür, ein erstes Synchronisierungs-Erkennungssignal auszugeben;
dass jeder der zweiten Empfängerblöcke (1502a, 1502b, ..., 1502n) mit dem ersten Demodulator (140) des ersten Empfängerblocks (1501) verbunden ist, und dass jeder der zweiten Kennzeichnungssignal-Abtrenner (1312) dafür eingerichtet ist, das Kennzeichnungssignal vom zweiten Übertragungssignal abzutrennen, wobei das Kennzeichnungssignal die Quelle des zweiten Übertragungssignals kennzeichnet;
dass jeder zweite Demodulator einen Phasenschieber (140h) umfasst, wobei der Phasenschieber (140h) mit dem ersten Demodulator (140) verbunden ist, damit die Phase des ersten PN-Codes verschoben wird; und
einen Multiplizierer (140e2), wobei der Multiplizierer (140e2) dafür eingerichtet ist, die umgekehrte Bandspreizverarbeitung des Spektrums des zweiten Übertragungssignals vorzunehmen, und zwar durch das Multiplizieren des zweiten Übertragungssignals mit dem ersten PN-Code, den der Phasenschieber (140h) ausgibt;
dass der zweite Synchronisierungsdetektor (1302) mit dem zweiten Demodulator verbunden und dafür eingerichtet ist, festzustellen, ob die Phase des zweiten Übertragungssignals mit der Phase des ersten PN-Codes synchronisiert ist, den der Phasenschieber (140h) ausgibt;
dass der zweite Kennzeichnungssignal-Abtrenner (1312) dafür ausgelegt ist, das Kennzeichnungssignal vom demodulierten zweiten Übertragungssignal abzutrennen;
einen Steuersignalgenerator (160), der dafür eingerichtet ist, ein Steuersignal zu erzeugen, das die Phase des ersten PN-Codes verschiebt, damit die Bandspreizmodulation des zweiten Übertragungssignals verarbeitet wird und die Empfangssynchronisierung für das zweite Übertragungssignal abhängig von den Ausgangssignalen der ersten und zweiten Synchronisierungsdetektoren (130, 1302) und der ersten und zweiten Kennzeichnungssignal-Abtrenner (131, 1312) hergestellt wird;
einen ersten Senderblock (120), der eine Steuersignal-Multiplexvorrichtung (100) umfasst sowie einen ersten Modulator (110);
dass die Steuersignal-Multiplexvorrichtung (100) dafür ausgelegt ist, das Steuersignal mit einem ersten eingegebenen Informationssignal zu multiplexen;
dass der erste Modulator (110) einen zweiten PN-Code-Generator (110b) umfasst, der dafür eingerichtet ist, einen zweiten PN-Code aus einem Taktimpuls mit fester Frequenz zu erzeugen;
dass der zweite Sender-Empfänger (20) einen dritten Empfängerblock (250), einen Phasenregler (270), einen Kennzeichnungssignal-Generator (280) und einen dritten Senderblock (220) umfasst;
dass der dritte Empfängerblock (250) einen dritten Demodulator (240), einen dritten Synchronisierungsdetektor (230) und einen Steuersignalabtrenner (232) umfasst;
dass der dritte Demodulator (240) dafür eingerichtet ist, das erste Übertragungssignal zu empfangen, und dafür, eine umgekehrte Bandspreizverarbeitung des Spektrums des ersten Übertragungssignals vorzunehmen, und zwar durch das Synchronisieren der Phase des zweiten PN-Codes mit der Phase des ersten Übertragungssignals;
dass der dritte Synchronisierungsdetektor (230) dafür eingerichtet ist, festzustellen, ob die Phase des ersten Übertragungssignals mit der Phase des zweiten PN-Codes synchronisiert ist, und dafür, ein drittes Synchronisierungs-Erkennungssignal auszugeben;
dass der Steuersignalabtrenner (232) dafür eingerichtet ist, das Steuersignal vom demodulierten ersten Übertragungssignal abzutrennen;
dass der Phasenregler (270) dafür eingerichtet ist, ein Phasenregelsignal zu erzeugen, damit die Phase des ersten PN-Codes für die Bandspreizmodulation abhängig vom dritten Synchronisierungs-Erkennungssignal und vom ersten abgetrennten Übertragungssignal geregelt wird;
dass der Kennzeichnungssignal-Generator (280) dafür eingerichtet ist, das Kennzeichnungssignal zu erzeugen;
dass der dritte Senderblock (220) eine Kennzeichnungssignal-Multiplexvorrichtung (200) und einen Bandspreizmodulator (210) umfasst;
dass die Kennzeichnungssignal-Multiplexvorrichtung (200) daran angepasst ist, das Kennzeichnungssignal mit einem zweiten eingegebenen Informationssignal zu multiplexen;
dass der Bandspreizmodulator (210) einen ersten PN-Code-Generator (210a) enthält, der dafür ausgelegt ist, den ersten PN-Code zu erzeugen, indem er einen Taktimpuls erzeugt, der mit der Phase des Ausgangssignals des dritten Demodulators (240) synchronisiert ist; und
dass der dritte Demodulator (240) dafür ausgelegt ist, eine Bandspreizverarbeitung des ersten Übertragungssignals vorzunehmen, indem er das erste Übertragungssignal mit dem ersten PN-Code multiplext,
wobei der Bandspreizmodulator (210) zudem einen zweiten Phasenschieber (210b) umfasst, der mit dem ersten PN-Code-Generator (210a) verbunden ist, und der Phasenschieber (210b) die Phase des ersten PN-Codes abhängig von dem Phasenregelsignal verschiebt, um die Empfangssynchronisierung des ersten Sender-Empfängers (10) herzustellen.

4. Bandspreiz-Kommunikationsvorrichtung, umfassend einen ersten Sender-Empfänger (10), der dafür eingerichtet ist, ein erstes Übertragungssignal zu senden, das mit einem zweiten PN-Code bandspreizmoduliert ist; und einen zweiten Sender-Empfänger (20), der dafür eingerichtet ist, ein zweites Übertragungssignal zu senden, das mit einem ersten PN-Code bandspreizmoduliert und mit einem Kennzeichnungssignal gemultiplext ist, wobei das erste Übertragungssignal an den zweiten Sender-Empfänger (20) gesendet wird und das zweite Übertragungssignal an den ersten Sender-Empfänger (10) gesendet wird,
und der erste Sender-Empfänger (10) umfasst:
eine Anzahl erste Empfängerblöcke (1501, 1502, ..., 150n), die jeweils einen ersten Demodulator (140), einen ersten Synchronisierungsdetektor (130) und einen Kennzeichnungssignal-Abtrenner (131) enthalten;
dass der erste Demodulator (140) dafür ausgelegt ist, das zweite Übertragungssignal zu empfangen, und dafür, eine umgekehrte Bandspreizverarbeitung des Spektrums des zweiten Übertragungssignals vorzunehmen, und zwar durch das Synchronisieren der Phase des ersten PN-Codes mit der Phase des zweiten Übertragungssignals;
dass der erste Synchronisierungsdetektor (130) mit dem ersten Demodulator (140) verbunden ist und dafür eingerichtet ist, festzustellen, ob die Phase des zweiten Übertragungssignals mit der Phase des ersten PN-Codes synchronisiert ist;
einen Steuersignalgenerator (160), der dafür eingerichtet ist, ein Steuersignal zu erzeugen, das die Phase des ersten PN-Codes steuert, damit die Bandspreizmodulation des zweiten Übertragungssignals verarbeitet wird und die Empfangssynchronisierung für das zweite Übertragungssignal abhängig von den Ausgangssignalen des ersten Synchronisierungsdetektors (130) und des Kennzeichnungssignal-Abtrenners (131) hergestellt wird;
einen ersten Senderblock (120), der eine Steuersignal-Multiplexvorrichtung (100) umfasst sowie einen ersten Modulator (110);
dass die Steuersignal-Multiplexvorrichtung (100) dafür ausgelegt ist, das Steuersignal mit einem ersten eingegebenen Informationssignal zu multiplexen;
dass der erste Modulator (110) einen zweiten PN-Code-Generator (110b) umfasst, der dafür eingerichtet ist, einen zweiten PN-Code aus einem Taktimpuls mit fester Frequenz zu erzeugen;
dass der erste Sender-Empfänger (10) zudem mit einem zweiten Senderblock (1202) versehen ist;
dass der zweite Senderblock (1202) eine dritten Modulator umfasst, der dafür eingerichtet ist, die Bandspreizverarbeitung eines dritten eingegebenen Informationssignals vorzunehmen, und dafür, das modulierte dritte eingegebene Informationssignal mit dem Ausgangssignal eines ersten Phasenschiebers zu multiplizieren;
dass der zweite Sender-Empfänger (20) einen dritten Empfängerblock (250) umfasst, einen Phasenregler (270), einen Kennzeichnungssignal-Generator (280) und einen dritten Senderblock (220);
dass der dritte Empfängerblock (250) einen dritten Demodulator (240) umfasst, einen dritten Synchronisierungsdetektor (230) und einen Steuersignalabtrenner (232);
dass der dritte Demodulator (240) einen ersten Phasenschieber (291) enthält, der die Phase des ersten PN-Codes verschiebt, wobei der erste Phasenschieber an den Phasenregler (270) und an einen ersten PN-Code-Generator (210a) angeschlossen ist;
dass der dritte Demodulator dafür ausgelegt ist, die umgekehrte Bandspreizverarbeitung des Spektrums des ersten Übertragungssignals vorzunehmen, und dafür, die Phase des zweiten PN-Codes mit der Phase des ersten Übertragungssignals zu synchronisieren;
dass der zweite Synchronisierungsdetektor (230) dafür eingerichtet ist, festzustellen, ob die Phase des ersten Übertragungssignals mit der Phase des zweiten PN-Codes synchronisiert ist;
dass der Steuersignalabtrenner (232) dafür ausgelegt ist, das Steuersignal vom ersten Übertragungssignal abzutrennen;
dass der Phasenregler (270) dafür eingerichtet ist, ein Phasenregelsignal zu erzeugen, damit die Phase des ersten PN-Codes für die Bandspreizmodulation geregelt wird, und zwar abhängig vom zweiten Synchronisierungs-Erkennungssignal und vom abgetrennten ersten Übertragungssignal;
dass der Kennzeichnungssignal-Generator (280) dafür eingerichtet ist, das Kennzeichnungssignal zu erzeugen, wobei das Kennzeichnungssignal die Quelle des zweiten Übertragungssignals kennzeichnet;
dass der zweite Senderblock (220) eine Kennzeichnungssignal-Multiplexvorrichtung (200) und einen Bandspreizmodulator (210) enthält;
dass die Kennzeichnungssignal-Multiplexvorrichtung (200) das Kennzeichnungssignal mit einem zweiten eingegebenen Informationssignal multiplext;
dass der Bandspreizmodulator (210) einen ersten PN-Code-Generator (210a) umfasst, der den ersten PN-Code erzeugt, indem er einen Taktimpuls erzeugt, der mit der Phase des Ausgangssignals des zweiten Demodulators synchronisiert ist; und
dass der zweite Demodulator (240) dafür eingerichtet ist, eine Bandspreizverarbeitung des ersten Übertragungssignals vorzunehmen,
wobei der Bandspreizmodulator (210) zudem einen zweiten Phasenschieber (210b) umfasst, der mit dem PN-Code-Generator (210a) verbunden ist, und der Phasenschieber (210) die Phase des ersten PN-Codes abhängig vom Phasenregelsignal verschiebt, um die Empfangssynchronisierung des ersten Sender-Empfängers herzustellen.

5. Bandspreiz-Kommunikationsvorrichtung nach Anspruch 4, wobei:
mindestens ein zweiter Empfängerblock (1502) der ersten Empfängerblöcke umfasst:
einen ersten Phasenschieber (140h), der an den ersten Demodulator (140) eines ersten Empfängerblocks der ersten Empfängerblöcke angeschlossen ist, um die Phase des ersten PN-Codes zu verschieben; und
der erste Demodulator (140) des zweiten Empfängerblocks der ersten Empfängerblöcke daran angepasst ist, eine umgekehrte Bandspreizverarbeitung des Spektrums vorzunehmen, indem er das zweite Übertragungssignal eingibt und das zweite Übertragungssignal mit dem ersten PN-Code multipliziert, wobei die Phase des ersten PN-Codes vom ersten Phasenschieber (140h) verschoben wird.

6. Bandspreiz-Kommunikationsvorrichtung nach Anspruch 1, 2 oder 4, wobei der erste Phasenschieber (140h), der die erste PN-Code-Phase des zweiten Sender-Empfängers verschiebt, eine Vorrichtung enthält, die die erste PN-Code-Phase um eine Phasendifferenz verschiebt, die mehr als eine vorbestimmt Chipdauer beträgt.

7. Bandspreiz-Kommunikationsvorrichtung nach irgendeinem der Ansprüche 1 bis 5, wobei der Phasenschieber, der die Phase des ersten PN-Codes des zweiten Sender-Empfängers verschiebt, eine Vorrichtung enthält, die eine Phase kontinuierlich verschiebt.

8. Bandspreiz-Kommunikationsvorrichtung nach irgendeinem der Ansprüche 1 bis 5, wobei der erste und der zweite Sender-Empfänger für das Senden und das Empfangen in den gleichen Frequenzbändern ausgelegt sind.

9. Bandspreiz-Kommunikationsvorrichtung nach irgendeinem der Ansprüche 1 bis 5, wobei der erste und der zweite Sender-Empfänger für das Senden und das Empfangen in unterschiedlichen Frequenzbändern ausgelegt sind.

## Revendications

1. Système de communication à étalement de spectre, comprenant un premier émetteur-récepteur (10), conçu pour émettre un premier signal d'émission qui a été modulé par étalement de spectre à l'aide d'un deuxième code de pseudo-bruit ; et un deuxième émetteur-récepteur (20), conçu pour émettre un deuxième signal d'émission qui a été modulé par étalement de spectre à l'aide d'un premier code de pseudo-bruit, dans lequel ledit premier signal d'émission est transmis audit deuxième émetteur-récepteur (20) et ledit deuxième signal d'émission est transmis audit premier émetteur-récepteur (10), ledit premier émetteur-récepteur (10) comprenant :
un premier bloc de réception (1501), ledit premier bloc de réception (1501) comprenant un premier démodulateur à étalement de spectre (140), conçu pour recevoir ledit deuxième signal d'émission et conçu pour exécuter une démodulation par étalement de spectre dudit deuxième signal d'émission en synchronisant la phase dudit premier code de pseudo-bruit avec la phase dudit deuxième signal d'émission ; un détecteur de synchronisation (130), conçu pour déterminer si le signal de démodulation par étalement de spectre est synchronisé avec la phase du premier code de pseudo-bruit et conçu pour fournir en sortie un signal de détection de synchronisation ;
un générateur de signal de commande (160), conçu pour générer un signal de commande destiné à décaler la phase du premier code de pseudo-bruit afin de réaliser la modulation par étalement de spectre au niveau du deuxième émetteur-récepteur (20), afin d'établir une synchronisation dudit deuxième signal d'émission et dudit premier code de pseudo-bruit, sur la base du signal de détection de synchronisation;
un premier bloc d'émission (120), conçu pour émettre ledit premier signal d'émission en multiplexant un premier signal d'information d'entrée avec le signal de commande et conçu pour exécuter une modulation par étalement de spectre du signal multiplexé avec un deuxième code de pseudo-bruit;
ledit deuxième émetteur-récepteur (20) comprenant:
un deuxième bloc de réception (250), ledit deuxième bloc de réception (250) comprenant un deuxième démodulateur à étalement de spectre (240), conçu pour recevoir ledit premier signal d'émission, conçu pour exécuter un processus inverse d'étalement de spectre sur le spectre dudit premier signal d'émission, en synchronisant la phase dudit deuxième code de pseudo-bruit avec la phase dudit premier signal d'émission et conçu pour démoduler ledit premier signal d'émission ;
un séparateur de signal de commande (232), conçu pour séparer le signal de commande dudit premier signal d'émission démodulé et conçu pour fournir en sortie le signal séparé ;
un contrôleur de phase (270), conçu pour générer un signal de commande de phase destiné à décaler la phase du premier code de pseudo-bruit pour le processus d'étalement de spectre, afin d'établir la synchronisation de réception du deuxième émetteur-récepteur (20) sur la base dudit signal séparé ;
un deuxième bloc d'émission (220), conçu pour émettre ledit deuxième signal d'émission en exécutant le processus d'étalement de spectre sur un deuxième signal d'information d'entrée à l'aide dudit premier code de pseudo-bruit, ledit premier code de pseudo-bruit étant généré par une impulsion d'horloge qui est synchronisée avec la phase dudit deuxième démodulateur à étalement de spectre (240), si bien que la phase dudit premier code de pseudo-bruit est synchronisée avec la phase dudit deuxième code de pseudo-bruit ; et
un déphaseur (210b), connecté entre le deuxième bloc de réception (250) et le deuxième bloc d'émission (220), conçu pour décaler la phase dudit premier code de pseudo-bruit sur la base dudit signal de commande de phase, afin d'établir une synchronisation de la réception avec le premier émetteur-récepteur (10).

2. Système de communication à étalement de spectre, comprenant un premier émetteur-récepteur (10), conçu pour émettre un premier signal d'émission qui a été modulé par étalement de spectre à l'aide d'un deuxième code de pseudo-bruit; et un deuxième émetteur-récepteur (20), conçu pour émettre un deuxième signal d'émission qui a été modulé par étalement de spectre à l'aide d'un premier code de pseudo-bruit et multiplexé avec un signal d'identification, dans lequel ledit premier signal d'émission est transmis audit deuxième émetteur-récepteur (20) et ledit deuxième signal d'émission est transmis audit premier émetteur-récepteur (10), ledit premier émetteur-récepteur (10) comprenant :
une pluralité de premiers blocs de réception (1501, 1502, ..., 150n), chacun comprenant un premier démodulateur (140), un premier détecteur de synchronisation (130) et un séparateur de signal d'identification (131) ;
le premier démodulateur (140) étant conçu pour recevoir ledit deuxième signal d'émission et pour exécuter un processus inverse d'étalement de spectre sur le spectre dudit deuxième signal d'émission en synchronisant la phase dudit premier code de pseudo-bruit avec la phase dudit deuxième signal d'émission ;
le premier détecteur de synchronisation (130), connecté au premier démodulateur (140), étant conçu pour détecter si la phase dudit deuxième signal d'émission est ou non synchronisée avec la phase dudit premier code de pseudo-bruit et pour fournir en sortie un premier signal de détection de la synchronisation ;
le séparateur de signal d'identification (131) étant conçu pour séparer ledit signal d'identification dudit deuxième signal d'émission ;
un générateur de signal de commande (160), conçu pour générer un signal de commande destiné à commander la phase dudit premier code de pseudo-bruit afin de réaliser la modulation par étalement de spectre du deuxième émetteur-récepteur (20), afin d'établir la synchronisation de réception pour ledit premier code de pseudo-bruit avec ledit deuxième signal d'émission, sur la base dudit premier signal de détection de la synchronisation ;
un premier bloc d'émission (120), comprenant un moyen de multiplexage de signal de commande (100) et un premier modulateur (110);
le moyen de multiplexage de signal de commande (100) étant conçu pour multiplexer ledit signal de commande avec un premier signal d'information d'entrée;
le premier modulateur (110) comprenant un générateur de deuxième code de pseudo-bruit (110b), conçu pour générer ledit deuxième code de pseudo-bruit, à partir d'une impulsion d'horloge de fréquence fixe;
le premier modulateur (110) étant conçu pour générer ledit premier signal d'émission en exécutant un processus d'étalement de spectre sur le premier signal d'information d'entrée et le signal de commande multiplexés, à l'aide dudit deuxième code de pseudo-bruit, et pour émettre ledit premier signal d'émission ; et
ledit deuxième émetteur-récepteur (20) comprenant un deuxième bloc de réception (250), un contrôleur de phase (270), un générateur de signal d'identification (280) et un deuxième bloc d'émission (220) ;
ledit deuxième bloc de réception (250) comprenant un deuxième démodulateur (240), un deuxième détecteur de synchronisation (230) et un séparateur de signal de commande (232) ;
le deuxième démodulateur (240) étant conçu pour recevoir ledit premier signal d'émission et pour exécuter un processus inverse d'étalement de spectre sur le spectre dudit premier signal d'émission, en synchronisant la phase dudit deuxième code de pseudo-bruit avec la phase dudit premier signal d'émission;
le deuxième détecteur de synchronisation (230) étant conçu pour détecter si la phase dudit premier signal d'émission est ou non synchronisée avec la phase dudit deuxième code de pseudo-bruit et pour fournir en sortie un deuxième signal de détection de la synchronisation;
le séparateur de signal de commande (232) étant conçu pour séparer ledit signal de commande dudit premier signal d'émission ;
le contrôleur de phase (270) étant conçu pour générer un signal de commande de phase destiné à commander la phase du premier code de pseudo-bruit pour la modulation par étalement de spectre, afin d'établir la synchronisation de réception dudit deuxième émetteur-récepteur (20) sur la base dudit deuxième signal de détection de la synchronisation et du premier signal d'émission séparé ;
le générateur de signal d'identification (280) étant conçu pour générer le signal d'identification, ledit signal d'identification identifiant la source d'émission dudit deuxième signal d'émission;
le deuxième bloc d'émission (220) comprenant un moyen de multiplexage du signal d'identification (200) et un modulateur à étalement de spectre (210) ;
le moyen de multiplexage du signal d'identification (200) étant conçu pour multiplexer le signal d'identification avec un deuxième signal d'information d'entrée ;
le modulateur à étalement de spectre (210) comprenant un générateur de premier code de pseudo-bruit (210a) conçu pour générer ledit premier code de pseudo-bruit en produisant une impulsion d'horloge qui est synchronisée avec la phase dudit deuxième démodulateur (240), si bien que la phase du premier code de pseudo-bruit est synchronisée avec la phase dudit deuxième code de pseudo-bruit ; et
le modulateur à étalement de spectre (210) étant conçu pour exécuter le processus d'étalement de spectre sur ledit deuxième signal d'information d'entrée et ledit signal d'identification multiplexés, à l'aide dudit premier code de pseudo-bruit ;
dans lequel le modulateur à étalement de spectre (210) comprend en outre un déphaseur (210b) connecté au générateur de premier code de pseudo-bruit (210a), le déphaseur (210b) décalant la phase du premier code de pseudo-bruit sur la base du signal de commande de phase afin d'établir la synchronisation de réception du premier émetteur-récepteur (10).

3. Appareil de communication à étalement de spectre, comprenant un premier émetteur-récepteur (10), conçu pour émettre un premier signal d'émission qui a été modulé par étalement de spectre à l'aide d'un deuxième code de pseudo-bruit ; et un deuxième émetteur-récepteur (20), conçu pour émettre un deuxième signal d'émission qui a été modulé par étalement de spectre à l'aide d'un premier code de pseudo-bruit et multiplexé avec un signal d'identification, dans lequel ledit premier signal d'émission est transmis audit deuxième émetteur-récepteur (20) et ledit deuxième signal d'émission est transmis audit premier émetteur-récepteur (10),
ledit premier émetteur-récepteur (10) comprenant :
un premier bloc de réception (1501) comprenant un premier démodulateur (140), un premier détecteur de synchronisation (130) et un premier séparateur de signal d'identification (131) ;
au moins un desdits deuxièmes blocs de réception (1502a, 1502b, ..., 1502n), chacun d'au moins un desdits deuxièmes blocs de réception comprenant un deuxième démodulateur, un deuxième détecteur de synchronisation (1302) et un deuxième séparateur de signal d'identification (1312) ;
le premier démodulateur (140) étant conçu pour recevoir ledit deuxième signal d'émission et pour exécuter un processus inverse par étalement de spectre sur le spectre dudit deuxième signal d'émission en synchronisant la phase dudit premier code de pseudo-bruit avec la phase dudit deuxième signal d'émission ;
le premier détecteur de synchronisation (130), connecté au premier démodulateur (140), étant conçu pour détecter si la phase dudit deuxième signal d'émission est ou non synchronisée avec la phase dudit premier code de pseudo-bruit et pour fournir en sortie un premier signal de détection de la synchronisation ;
chacun desdits deuxièmes blocs de réception (1502a, 1502b, ..., 1502n) étant connecté au premier démodulateur (140) du premier bloc de réception (1501), chacun desdits deuxièmes séparateurs de signal d'identification (1312) étant conçu pour séparer le signal d'identification dudit deuxième signal d'émission, ledit signal d'identification identifiant la source dudit deuxième signal d'émission ;
chacun desdits deuxièmes démodulateurs comprenant un déphaseur (140h), le déphaseur (140h) étant connecté au premier démodulateur (140) afin de décaler la phase du premier code de pseudo-bruit ; et
un multiplicateur (140e2), le multiplicateur (140e2) étant conçu pour exécuter le processus inverse d'étalement de spectre sur le spectre dudit deuxième signal d'émission en multipliant le deuxième signal d'émission par ledit premier code de pseudo-bruit fourni en sortie par le déphaseur (140h) ;
le deuxième détecteur de synchronisation (1302) étant connecté au deuxième démodulateur et conçu pour détecter si la phase dudit deuxième signal d'émission est ou non synchronisée avec la phase dudit premier code de pseudo-bruit fourni par le déphaseur (140h) ;
le deuxième séparateur de signal d'identification (1312) étant conçu pour séparer ledit signal d'identification du deuxième signal d'émission démodulé ;
un générateur de signal de commande (160), conçu pour générer un signal de commande destiné à commander la phase dudit premier code de pseudo-bruit, pour le traitement de la modulation par étalement de spectre dudit deuxième signal d'émission, afin d'établir la synchronisation de réception pour ledit deuxième signal d'émission, sur la base des sorties desdits premier et deuxième détecteurs de synchronisation (130, 1302) et desdits premier et deuxième séparateurs de signal d'identification (131, 1312) ;
un premier bloc d'émission (120), comprenant un moyen de multiplexage de signal de commande (100) et un premier modulateur (110) ;
le moyen de multiplexage de signal de commande (100) étant conçu pour multiplexer ledit signal de commande avec un premier signal d'information d'entrée ;
le premier modulateur (110) comprenant un générateur de deuxième code de pseudo-bruit (110b), conçu pour générer un deuxième code de pseudo-bruit, à partir d'une impulsion d'horloge de fréquence fixe ;
ledit deuxième émetteur-récepteur (20) comprenant un troisième bloc de réception (250), un contrôleur de phase (270), un générateur de signal d'identification (280) et un troisième bloc d'émission (220) ;
le troisième bloc de réception (250) comprenant un troisième démodulateur (240), un troisième détecteur de synchronisation (230) et un séparateur de signal de commande (232) ;
le troisième démodulateur (240) étant conçu pour recevoir ledit premier signal d'émission et pour exécuter un processus inverse d'étalement de spectre sur le spectre dudit premier signal d'émission, en synchronisant la phase dudit deuxième code de pseudo-bruit avec la phase dudit premier signal d'émission ;
le troisième détecteur de synchronisation (230) étant conçu pour détecter si la phase dudit premier signal d'émission est ou non synchronisée avec la phase dudit deuxième code de pseudo-bruit et pour fournir en sortie un troisième signal de détection de la synchronisation ;
le séparateur de signal de commande (232) étant conçu pour séparer ledit signal de commande dudit premier signal d'émission démodulé ;
le contrôleur de phase (270) étant conçu pour générer un signal de commande de phase destiné à commander la phase dudit premier code de pseudo-bruit pour la modulation par étalement de spectre, sur la base dudit troisième signal de détection de synchronisation et dudit premier signal d'émission séparé ;
le générateur de signal d'identification (280) étant conçu pour générer le signal d'identification ;
le troisième bloc d'émission (220) comprenant un moyen de multiplexage du signal d'identification (200) et un modulateur à étalement de spectre (210) ;
le moyen de multiplexage du signal d'identification (200) étant conçu pour multiplexer le signal d'identification avec un deuxième signal d'information d'entrée ;
le modulateur à étalement de spectre (210) comprenant un générateur de premier code de pseudo-bruit (210a) conçu pour générer ledit premier code de pseudo-bruit en produisant une impulsion d'horloge qui est synchronisée avec la phase de la sortie dudit troisième démodulateur (240) ; et
le troisième démodulateur (240) étant conçu pour exécuter un processus d'étalement de spectre sur ledit premier signal d'émission en multiplexant ledit premier signal d'émission avec ledit premier code de pseudo-bruit ;
dans lequel le modulateur à étalement de spectre (210) comprend en outre un deuxième déphaseur (210b) connecté au générateur de premier code de pseudo-bruit (210a), le déphaseur (210b) décalant la phase dudit premier code de pseudo-bruit sur la base du signal de commande de phase afin d'établir la synchronisation de réception du premier émetteur-récepteur (10).

4. Appareil de communication à étalement de spectre, comprenant un premier émetteur-récepteur (10), conçu pour émettre un premier signal d'émission qui a été modulé par étalement de spectre à l'aide d'un deuxième code de pseudo-bruit ; et un deuxième émetteur-récepteur (20), conçu pour émettre un deuxième signal d'émission qui a été modulé par étalement de spectre à l'aide d'un premier code de pseudo-bruit et multiplexé avec un signal d'identification, dans lequel ledit premier signal d'émission est transmis audit deuxième émetteur-récepteur (20) et ledit deuxième signal d'émission est transmis audit premier émetteur-récepteur (10),
ledit premier émetteur-récepteur (10) comprenant :
une pluralité de premiers blocs de réception (1501, 1502, ..., 150n), chacun comprenant un premier démodulateur (140), un premier détecteur de synchronisation (130) et un séparateur de signal d'identification (131) ;
le premier démodulateur (140) étant conçu pour recevoir ledit deuxième signal d'émission et pour exécuter un processus inverse d'étalement de spectre sur le spectre dudit deuxième signal d'émission en synchronisant la phase dudit premier code de pseudo-bruit avec la phase dudit deuxième signal d'émission ;
le premier détecteur de synchronisation (130), connecté au premier démodulateur (140), étant conçu pour détecter si la phase dudit deuxième signal d'émission est ou non synchronisée avec la phase dudit premier code de pseudo-bruit ;
un générateur de signal de commande (160), conçu pour générer un signal de commande destiné à commander la phase dudit premier code de pseudo-bruit afin de réaliser la modulation par étalement de spectre du deuxième signal d'émission, afin d'établir la synchronisation de réception pour ledit deuxième signal d'émission, sur la base des sorties dudit premier détecteur de synchronisation (130) et dudit séparateur de signal d'identification (131) ;
un premier bloc d'émission (120), comprenant un moyen de multiplexage de signal de commande (100) et un premier modulateur (110) ;
le moyen de multiplexage de signal de commande (100) étant conçu pour multiplexer ledit signal de commande avec un premier signal d'information d'entrée ;
le premier modulateur (110) comprenant un générateur de deuxième code de pseudo-bruit (110b), conçu pour générer un deuxième code de pseudo-bruit, à partir d'une impulsion d'horloge de fréquence fixe ;
le premier émetteur-récepteur (10) comprenant en outre un deuxième bloc d'émission (1202) ;
le deuxième bloc d'émission (1202) comprenant un troisième modulateur, conçu pour réaliser le processus d'étalement de spectre sur un troisième signal d'information d'entrée et pour multiplier ledit troisième signal d'information d'entrée avec la sortie d'un premier déphaseur ;
ledit deuxième émetteur-récepteur (20) comprenant un troisième bloc de réception (250), un contrôleur de phase (270), un générateur de signal d'identification (280) et un troisième bloc d'émission (220) ;
le troisième bloc de réception (250) comprenant un troisième démodulateur (240), un troisième détecteur de synchronisation (230) et un séparateur de signal de commande (232) ;
le troisième démodulateur (240) comprenant un premier déphaseur (291), destiné à décaler la phase dudit premier code de pseudo-bruit, ledit premier déphaseur étant connecté audit contrôleur de phase (270) et à un générateur de premier code de pseudo-bruit (210a) ;
le troisième démodulateur étant conçu pour exécuter le processus inverse d'étalement de spectre sur le spectre dudit premier signal d'émission et pour synchroniser la phase dudit deuxième code de pseudo-bruit avec la phase dudit premier signal d'émission ;
le deuxième détecteur de synchronisation (230) étant conçu pour détecter si la phase dudit premier signal d'émission est ou non synchronisée avec la phase dudit deuxième code de pseudo-bruit ;
le séparateur de signal de commande (232) étant conçu pour séparer ledit signal de commande dudit premier signal d'émission ;
le contrôleur de phase (270) étant conçu pour générer un signal de commande de phase destiné à commander la phase du premier code de pseudo-bruit pour la modulation par étalement de spectre, sur la base dudit deuxième signal de détection de la synchronisation et dudit premier signal d'émission séparé ;
le générateur de signal d'identification (280) étant conçu pour générer le signal d'identification, le signal d'identification identifiant la source dudit deuxième signal d'émission ;
le deuxième bloc d'émission (220) comprenant un moyen de multiplexage du signal d'identification (200) et un modulateur à étalement de spectre (210) ;
le moyen de multiplexage du signal d'identification (200) multiplexant le signal d'identification avec un deuxième signal d'information d'entrée ;
le modulateur à étalement de spectre (210) comprenant un générateur de premier code de pseudo-bruit (210a) destiné à produire ledit premier code de pseudo-bruit en produisant une impulsion d'horloge qui est synchronisée avec la phase de la sortie dudit deuxième démodulateur ; et
le deuxième démodulateur (240) étant conçu pour effectuer un processus d'étalement de spectre sur ledit premier signal d'émission ;
dans lequel le modulateur à étalement de spectre (210) comprend en outre un deuxième déphaseur (210b) connecté au générateur de premier code de pseudo-bruit (210a), le déphaseur (210b) décalant la phase dudit premier code de pseudo-bruit sur la base du signal de commande de phase afin d'établir la synchronisation de réception du premier émetteur-récepteur.

5. Appareil de communication à étalement de spectre selon la revendication 4, dans lequel:
au moins un deuxième (1502) desdits premiers blocs de réception comprend :
un premier déphaseur (140h), connecté au premier démodulateur (140) d'un premier des premiers blocs de réception, destiné à décaler la phase du premier code de pseudo-bruit ; et
le premier démodulateur (140) du deuxième des premiers blocs de réception étant conçu pour exécuter le processus inverse d'étalement de spectre sur le spectre en injectant en entrée ledit deuxième signal d'émission et en multipliant ledit deuxième signal d'émission par le premier code de pseudo-bruit, la phase dudit premier code de pseudo-bruit étant décalée par ledit premier déphaseur (140h).

6. Appareil de communication à étalement de spectre selon la revendication 1, 2 ou 4, dans lequel le premier déphaseur (140h), destiné à décaler la phase du premier code de pseudo-bruit du deuxième émetteur-récepteur, comprend un moyen destiné à décaler la phase du premier code de pseudo-bruit d'une différence de phase qui est supérieure à une durée prédéterminée de bribe.

7. Appareil de communication à étalement de spectre selon l'une quelconque des revendications 1 à 5, dans lequel le déphaseur destiné à décaler la phase dudit premier code de pseudo-bruit dudit deuxième émetteur-récepteur comprend un moyen destiné à décaler une phase de manière continue.

8. Appareil de communication à étalement de spectre selon l'une quelconque des revendications 1 à 5, dans lequel le premier et le deuxième émetteur-récepteur sont conçus pour émettre et recevoir dans les mêmes bandes de fréquence.

9. Appareil de communication à étalement de spectre selon l'une quelconque des revendications 1 à 5, dans lequel le premier et le deuxième émetteur-récepteur sont conçus pour émettre et recevoir dans des bandes de fréquence différentes.
